# EUROPEAN PATENT APPLICATION

(11) **EP 4 815 555 A1**
(43) Date of publication of application: **30.09.2026**
(21) Application number: 24907788.4
(22) Date of filing: 08.11.2024
(51) Int. Cl.: H04W 28/086, H04W 28/08, H04W 40/34, H04W 8/24, H04W 76/15, H04W 24/02, H04L 5/00, H04W 88/08

(54) **METHOD AND APPARATUS FOR SCALING DISTRIBUTED UNIT IN SYSTEM SUPPORTING MERGING OF PLURALITY OF CELLS**

(30) Priority: 20.12.2023 KR 20230187633; 03.04.2024 KR 20240045513
(71) Applicant: Samsung Electronics Co., Ltd., Suwon-si, Gyeonggi-do 16677 (KR)
(72) Inventor: AHN, Heungseop, Suwon-si, Gyeonggi-do 16677 (KR); PARK, Hanjung, Suwon-si, Gyeonggi-do 16677 (KR)
(74) Representative: Appleyard Lees IP LLP
(86) International application number: PCT/KR2024/017672
(87) International publication number: WO 2025/135503

(57) **Abstract**

Disclosed are a method and an apparatus for scaling a distributed unit in a system supporting merging of a plurality of cells. The method may comprise the steps of: switching a path between an RU of a first cell and a PHY entity of a first DU to a path between the RU and a PHY entity of a second DU; identifying whether the first cell is configured as a PCell or an SCell for a terminal; on the basis that the first cell is configured as the PCell for the terminal, switching a path between an RLC entity of the first DU and an MAC entity of the first DU to a path between the RLC entity of the first DU and an MAC entity of the second DU; and transferring context information of the terminal related to the RLC entity of the first DU to an RLC entity of the second DU.

## Description

### TECHNICAL FIELD

The present disclosure relates to a method and apparatus for scaling a distributed unit in a system supporting aggregation of a plurality of cells.

### BACKGROUND ART

In the communications industry, technology for virtualized radio access networks (vRAN) is growing rapidly. Conventional hardware-based RANs required specific hardware to perform each function for communication, and mobile operators had to build RANs using hardware components from the same manufacturer due to issues such as interoperability between hardware. However, a vRAN is a software-based RAN rather than a hardware-based RAN, where functions for communication can be performed by software components. In other words, a vRAN does not require specific hardware to perform functions for communication, and software components of the vRAN can perform the functions by being executed on general-purpose server apparatuses. Accordingly, mobile operators can build vRANs using products from various manufacturers, without being dependent on the products of a single manufacturer.

Wireless communication systems based on 4th generation (4G) long-term evolution (LTE) or 5th generation (5G) new radio (NR) can support carrier aggregation (CA), which uses a plurality of carriers. CA is a technology that aggregates a plurality of carriers to be utilized as a single carrier to address the shortage of frequency bands. Through CA, a plurality of component carriers each having a narrowband can be aggregated to establish a wide-band. For example, in a wireless communication system to which CA is applied, a user equipment (UE) can communicate with a core network by simultaneously using multiple aggregated carriers. Accordingly, a high data transmission rate and low transmission latency may be provided to the UE.

### DISCLOSURE OF INVENTION

### SOLUTION TO PROBLEM

The present disclosure may be implemented in various forms, including a method, a system, an apparatus, or a computer program stored in a computer-readable storage medium.

In an embodiment of the present disclosure, a method of scaling at least one distributed unit (DU), performed by a network apparatus supporting carrier aggregation includes switching a path between a radio unit (RU) of a first cell and a physical (PHY) entity of a first DU to a path between the RU and a PHY entity of a second DU. In an embodiment of the present disclosure, the method includes identifying whether the first cell is configured as a primary cell (PCell) or a secondary cell (SCell) to a terminal. In an embodiment of the present disclosure, the method includes, based on the first cell being configured as a PCell for the terminal, switching a path between a radio link control (RLC) entity of the first DU and a medium access control (MAC) entity of the first DU to a path between an RLC entity of the first DU and an MAC entity of the second DU. In an embodiment of the present disclosure, the method includes migrating context information of the terminal associated with the RLC entity of the first DU to an RLC entity of the second DU. In an embodiment of the present disclosure, the method includes switching a path between a central unit (CU) and the RLC entity of the first DU to a path between the CU and the RLC entity of the second DU. In an embodiment of the present disclosure, the method includes switching a path between the RLC entity of the first DU and the MAC entity of the second DU to a path between the RLC entity of the second DU and the MAC entity of the second DU.

In an embodiment of the present disclosure, a program for performing the method on a computer may be recorded on a computer-readable recording medium.

In an embodiment of the present disclosure, a network apparatus supporting carrier aggregation includes storing one or more instructions. In an embodiment of the present disclosure, the network apparatus includes at least one processor configured to execute the one or more instructions stored in the memory. In an embodiment of the present disclosure, to scale at least one DU, the at least one processor may execute the one or more instructions to cause the network apparatus to switch a path between an RU of a first cell and a PHY entity of a first DU to a path between the RU and a PHY entity of a second DU. In an embodiment of the present disclosure, to scale at least one DU, the at least one processor may execute the one or more instructions to cause the network apparatus to identify whether the first cell is configured as a PCell or an SCell for a terminal. In an embodiment of the present disclosure, to scale at least one DU, the at least one processor may execute the one or more instructions to cause the network apparatus to, based on the first cell being configured as a PCell for the terminal, switch a path between an RLC entity of the first DU and an MAC entity of the first DU to a path between an RLC entity of the first DU and an MAC entity of the second DU. In an embodiment of the present disclosure, to scale at least one DU, the at least one processor may execute the one or more instructions to cause the network apparatus to migrate context information of the terminal associated with the RLC entity of the first DU to an RLC entity of the second DU. In an embodiment of the present disclosure, to scale at least one DU, the at least one processor may execute the one or more instructions to cause the network apparatus to switch a path between a CU and the RLC entity of the first DU to a path between the CU and the RLC entity of the second DU. In an embodiment of the present disclosure, to scale at least one DU, the at least one processor may execute the one or more instructions to cause the network apparatus to switch a path between the RLC entity of the first DU and the MAC entity of the second DU to a path between the RLC entity of the second DU and the MAC entity of the second DU.

### BRIEF DESCRIPTION OF DRAWINGS

FIG. 1 is a diagram illustrating an example of a wireless communication system according to an embodiment of the present disclosure.
FIG. 2 is a diagram illustrating an example of cell migration from a first distributed unit (DU) to a second DU in a radio access network (RAN) system, according to an embodiment of the present disclosure.
FIG. 3 is a diagram illustrating an example of carrier aggregation (CA) according to an embodiment of the present disclosure.
FIG. 4A is a diagram illustrating an example of a carrier-aggregated first cell and second cell according to an embodiment of the present disclosure.
FIG. 4B is a diagram illustrating an example of a carrier-aggregated first cell and second cell according to an embodiment of the present disclosure.
FIG. 5 is a diagram illustrating an example of a method of scaling at least one DU by a network apparatus supporting aggregation of a plurality of cells including a first cell and a second cell, according to an embodiment of the present disclosure.
FIG. 6 is a flowchart illustrating an example of a method of scaling out a first DU to a second DU by a network apparatus, according to an embodiment of the present disclosure.
FIGS. 7A to 7C are each a diagram illustrating an example of a data flow in a user plane due to scaling-out of a first DU to a second DU by a network apparatus, according to an embodiment of the present disclosure.
FIGS. 8A to 8C are each a diagram illustrating an example of a data flow in a user plane due to scaling-out of a first DU to a second DU by a network apparatus, according to an embodiment of the present disclosure.
FIG. 9 is a flowchart illustrating an example of a method of scaling in a first DU to a second DU by a network apparatus, according to an embodiment of the present disclosure.
FIGS. 10A to 10C are each a diagram illustrating an example of a data flow in a user plane due to scaling-in of a first DU to a second DU by a network apparatus, according to an embodiment of the present disclosure.
FIG. 11 is a diagram illustrating an example of an electronic apparatus according to an embodiment of the present disclosure.

### MODE FOR THE INVENTION

As the present disclosure allows for various changes and numerous embodiments, embodiments will be illustrated in the drawings and described in detail in the written description. However, this is not intended to limit the present disclosure to particular modes of practice, and it is to be appreciated that all changes, equivalents, and substitutes that do not depart from the spirit and technical scope of the present disclosure are encompassed in embodiments.

In describing an embodiment, when detailed explanations about related arts unnecessarily blur the gist of the present disclosure, such explanations will be omitted. In addition, numbers used throughout the description (e.g., first, second, etc.) are only intended to distinguish one component from another.

Hereinafter, embodiments of the present disclosure will be described in detail with reference to the accompanying drawings so that a person of ordinary skill in the art may easily perform the present disclosure. However, the present disclosure may be implemented in various different forms and is not limited to the embodiments described herein. Before describing the disclosure in detail, terms used herein are defined or understood as below.

Throughout the present disclosure, when one component is "coupled to" or "connected to" another component, it should be construed as meaning that one component is directly coupled or connected to another component or one component is coupled or connected indirectly to another component via an intervening component arranged therebetween unless otherwise described. In addition, a "connection" may include a wireless connection or a wired connection.

As for components described as "unit," "module," etc., two or more components may be integrated with each other into a single component, or one component may be divided into two or more components according to subdivided functions. Also, each of the components to be described below may additionally perform all or a part of functions of other components, in addition to its main functions, and some of main functions of each components may be solely performed by other components.

Throughout the present disclosure, the expression "at least one of a, b, or c" may refer to "a," "b," "c," "a and b," "a and c," "b and c," "all of a, b, and c," or variations thereof. The expression "a or b" may refer to "a," "b," "a and b," or variations thereof. The expression "a (or, b, c)" or "a, b, or c" may refer to "a," "b," "c," "a and b," "a and c," "b and c," "all of a, b, and c," or variations thereof.

In an embodiment of the present disclosure, the term "migration" may include movement, copying, duplication, or synchronization of target information contained in an arbitrary logical or physical space to another arbitrary space. In an embodiment of the present disclosure, the term "migration" may include causing target information to be migrated (e.g., context information) which is included, stored, configured, or set in space A (or apparatus A, module A) to be included, stored, configured, or set in space B (or apparatus B, module B). In an embodiment of the present disclosure, the "migration" may include causing target information to be migrated, which is included, stored, configured, or set in space A (or apparatus A, module A) to be included, stored, configured, or set in space B (or apparatus B, module B), and include removing, deleting, releasing, or deactivating the target information from space A (or apparatus A, module A).

In an embodiment of the present disclosure, the term "cell migration" may include migration of at least one of information, context, or interfaces associated with a cell. For example, the "cell migration" may include migration of cell configuration information. The "cell migration" may refer to migration on a cell-by-cell basis and may include migration of cell configuration information and user equipment (UE) contexts of UE associated with the cell. The "cell migration" may refer to migration on a UE-by-UE basis and may include migration of an interface for user data (e.g., F1-U interface).

In an embodiment of the present disclosure, the "medium access control (MAC) context" may include cell configuration information or a UE context included in an MAC layer (or an entity performing functions of the MAC layer).

In an embodiment of the present disclosure, the "cell configuration information" may include information about basic setting, operating mode, configuration, or parameters of each cell in a wireless communication system. For example, the "cell configuration information" may include frequency bands, channel bands, frequency allocation information, transmission output power settings, cell identifiers, configurations in time and frequency domains, interference management with other cells and base stations, scheduling information (e.g., downlink (DL)/uplink (UL) max resource block, physical downlink shared channel (PDSCH), physical uplink shared channel (PUSCH), synchronization signal block (SSB), etc.), or timing information (e.g., number of slots per frame, etc.). Cells and all UEs connected (or attached) to a cell may be connected and managed based on the "cell configuration information."

In an embodiment of the present disclosure, the "UE context" may include information for wireless communication of each UE in a wireless communication system. For example, the "UE context" may include terminal location information, terminal identifiers, terminal status, service requirements, information on currently used networks and cells, terminal capability information, functional information, security information, or authentication information. The UE context may include a unique identifier for each UE connected to a base station according to specific scenarios (e.g., radio network temporary identifier (RNTI)), information on DL data volume per UE (e.g., buffer occupancy (BO)), information on UL data volume per UE (e.g., buffer status report (BSR)), a physical downlink control channel (PDCCH) monitoring period for the UE to transmit and receive new DL/UL traffic (e.g., discontinuous reception (DRX)), or retransmission information per UE (e.g., hybrid automatic repeat request (HARQ).

In an embodiment of the present disclosure, the "connection relationship" may encompass the meanings of "access relationship," "inclusion relationship," "attachment relationship," or "matching relationship." For example, the expression "connected" may encompass the meanings of "accessed," "included," "attached," or "matched." In an embodiment of the present disclosure, the term "connection'" may encompass the meaning that wired/wireless data communication is enabled. For example, the expression "A and B are connected to each other" may encompass the meaning that A and B are capable of data communication, that is, they are capable of transmitting and receiving data to and from each other.

In an embodiment of the present disclosure, the expression "A performs operation B" may include "A directly performs operation B" or "A controls C to perform operation B." In an embodiment of the present disclosure, the expression "A controls operation B" may include "A directly performs operation B" or "A controls C to perform operation B."

In an embodiment of the present disclosure, the term "UE associated with a cell" may include a UE connected to the cell, a UE attached to the cell, a UE communicating (i.e., transmitting and receiving data) with a radio unit (RU) including the cell, a UE provided with communication services through the cell, a UE transmitting and receiving data through the cell, a UE accessing a network through the cell, a UE within the coverage (e.g., effective range, communication range) of the cell, a UE requesting radio resources of the cell, or a UE allocated with radio resources of the cell. For example, one or more UEs associated with a target cell may establish and manage connections based on cell configuration information for the target cell.

In an embodiment of the present disclosure, the term "path" or "interface" may encompass the meaning of a module (e.g., a software module or a hardware module) that enables data transmission and reception. In an embodiment of the present disclosure, the term "path" or "interface" may encompass the meaning of logical or physical connection relationship. In an embodiment of the present disclosure, the term "path" or "interface" may encompass the meaning of data transmission and reception path. In an embodiment of the present disclosure, the expression "establishing an interface (or path) between A and B" may encompass configuring A and B to transmit and receive data to and from each other and to process the received data.

In an embodiment of the present disclosure, the term "scale-out for a distribution unit (DU)" and "scaling-out for a DU" may encompass adding a new DU to a DU pool in which the DU is included. In an embodiment of the present disclosure, the "scale-out for a DU" and "scaling-out for a DU" may include migrating a cell included in a DU to another DU (e.g., newly added DU).

In an embodiment of the present disclosure, the term "scale-in for a DU" and "scaling-in for a DU" may encompass removing a DU from a DU pool. In an embodiment of the present disclosure, the "scale-in for a DU" and "scaling-in for a DU" may include migrating a cell included in a DU to another DU (e.g., existing DU).

In an embodiment of the present disclosure, the term "target cell" may refer to a cell to be migrated through a scale-in for a DU or a scale-out for a DU. The term "source DU" may refer to a DU that has handled a target cell before migration of the target cell. Depending on the configuration of the RAN system, a target cell may be processed by one or more source DUs. Therefore, a plurality of source DUs may exist for the target cell. When a scale-in is performed for a DU, a source DU (or any one of a plurality of source DUs) may refer to a DU to be removed from a DU pool. The term "target DU" may refer to a DU that is changed to process the target cell through the migration of the target cell. When a scale-in is performed for a DU, a target DU may be a DU to be added to a DU pool.

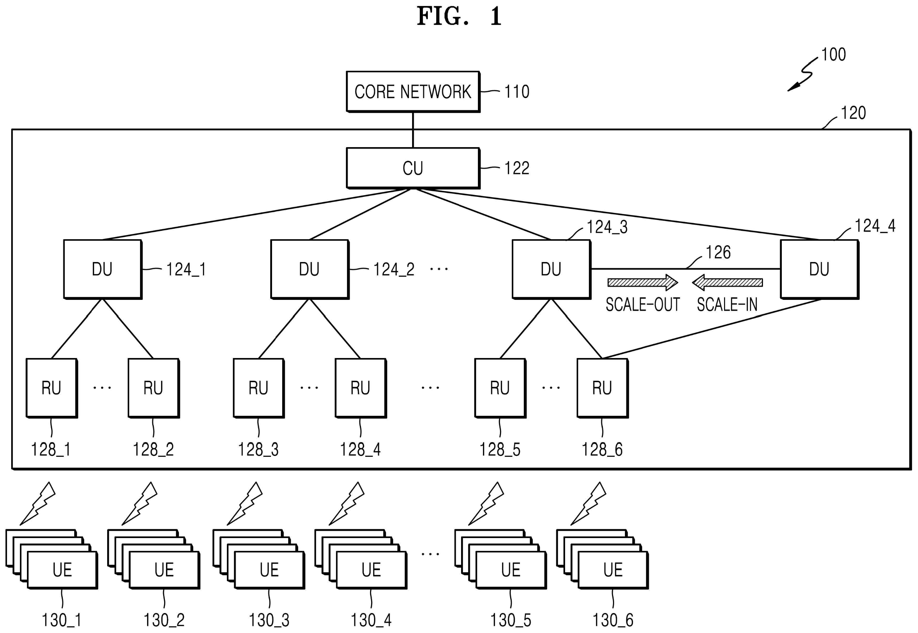

FIG. 1 is a diagram illustrating an example of a wireless communication system according to an embodiment of the present disclosure. In an embodiment of the present disclosure, a wireless communication system 100 may include a core network 110 and a radio access network (RAN) system 120. The core network 110 may include user authentication information, etc. of each mobile carrier and may be a platform network that is connected via wired optical cables to servers and systems of various service providers. In an embodiment of the present disclosure, the RAN system 120 may include at least one RU (128_1, 128_2, 128_3, 128_4, 128_5, and 128_6), at least one DU (124_1, 124_2, 124_3, and 124_4), and a centralized unit (CU) 122. In an embodiment of the present disclosure, the RAN system 120 may include a virtualized RAN (vRAN) system. However, the present disclosure is not limited thereto. For example, the RAN system 120 may include a 5G system (5GS), a 4GS, or other wireless communication systems, and may refer to a wireless communication system to be developed in the future.

In an embodiment of the present disclosure, the CU 122 may be an entity that performs functions of some of protocol layers of a network. For example, the CU 122 may be an entity that performs network functions of a radio resource control (RRC) layer and a packet data convergence protocol (PDCP) layer. However, the present disclosure is not limited thereto. The CU 122 may perform functions such as quality of service (QoS) configuration, packet reordering, and security configuration, or processing. The CU 122 may be implemented as a virtualized CU (vCU) of a vRAN system. However, the present disclosure is not limited thereto.

A single CU 122 may be connected to N DUs where N is an integer greater than 1. The CU 122 and the DU (124_1, 124_2, 124_3, and 124_4) may be connected to each other by an interface (or path). For example, the interface between the CU 122 and the DU (124_1, 124_2, 124_3, and 124_4) may be an F1 interface (or, a midhaul interface). The F1 interface may include F1-C, which is the F1 interface for a control plane, and F1-U, which is the F1 interface for a user plane.

The RAN system 120 may include the DU 124_1, the DU 124_2, and the DU 124_3. The DU 124_1, the DU 124_2, and the DU 124_3 may be implemented in substantially the same manner and may perform substantially the same functions. Hereinafter, the DU 124_3 is described as an example.

In an embodiment of the present disclosure, the DU 124_3 may be an entity that performs functions of some of the remaining network protocol layers, excluding the layers handled by the CU 122. For example, the DU 124_3 may be an entity that performs network functions (e.g., baseband functions) of an RLC layer, an MAC layer, or a PHY layer. However, the functions that may be processed by the DU 124_3 are not limited to the aforementioned functions of the RLC, MAC, and PHY layers. The DU 124_3 may perform functions such as buffering, radio resource scheduling, and data reprocessing. The DU 124_3 may be a virtualized DU (vDU) of the vRAN system. However, the present disclosure is not limited thereto. The DU 124_3 may correspond to a processing pod, a component module, an arbitrary processing unit, an arbitrary deployment unit for processing, or software. For example, the DU 124_3 may correspond to a single server.

A single DU may be connected to one or more RUs. Referring to FIG. 1, the DU 124_1 may be connected to the RU 128_1 and the RU 128_2, the DU 124_2 may be connected to the RU 128_3 and the RU 128_4, and the DU 124_3 may be connected to the RU 128_5 and the RU 128_6. In an embodiment of the present disclosure, the DU 124_3 and the RUs 128_5 and 128_6 may be connected to each other by an interface (or path). For example, the interface between the DU 124_3 and the RUs 128_5 and 128_6 may be a fronthaul interface.

The RU 128_1, the RU 128_2, the RU 128_3, the RU 128_4, the RU 128_5, and the RU 128_6 may communicate with one or more UEs. For example, the RU 128_1, the RU 128_2, the RU 128_3, the RU 128_4, the RU 128_5, and the RU 128_6 may communicate with one or more UEs (130_1, 130_2, 130_3, 130_3, 130_4, 130_5, and 130_6), respectively. The RU 128_1, the RU 128_2, the RU 128_3, the RU 128_4, the RU 128_5, and the RU 128_6 may be implemented in substantially the same manner and may perform substantially the same functions. Hereinafter, the RU 128_6 is described as an example.

In an embodiment of the present disclosure, the RU 128_6 may be an entity that performs specific functions of the PHY layer, other than those processed by the DU 124_3. For example, the DU 124_3 may perform functions of a high-PHY layer. The RU 128_6 may perform functions of a low-PHY layer. For example, the RU 128_6 may perform a function of receiving and transmitting data through a radio frequency (RF) antenna. The RU 128_6 may be a virtualized RU (vRU) of the vRAN system. However, the present disclosure is not limited thereto. A UE of one or more UEs 130_6 may communicate with the core network 110 through the RU 128_6, the DU 124_3, and the CU 122.

In the RAN system, the DU may be connected to a cell site including one or more RUs on a 1:1 basis, and the processing capacity of the DU may be determined based on the peak traffic load of the corresponding cell site. Based on temporal traffic patterns, the occurrence of maximum traffic load may be restricted to specific periods. For example, traffic increases during daytime hours when the number of users grows and decreases during nighttime hours when the number of users drops. Generally, peak traffic occurs between 17:00 and 20:00. Accordingly, in a RAN system with a fixed number of DUs, there may be unused DU resources, i.e., available surplus resources, during periods when peak traffic does not occur.

The vRAN system according to an embodiment of the present disclosure may employ vDU pooling, which decouples the conventional 1:1 relationship between DUs and cell sites (sets of RUs) to virtualize and pool DU resources. For example, a single DU may process at least a portion of the traffic from a first cell site and at least a portion of the traffic from a second cell site. Accordingly, the number of physical servers required to build the RAN system may decrease, thereby lowering capital expenditures (CAPEX). In addition, power consumption may be reduced compared to the conventional RAN systems, and operating expenditure (OPEX) may also be lowered.

The vRAN system according to an embodiment of the present disclosure may employ vCU pooling which virtualizes CUs by pooling them. Accordingly, the number of physical servers required to build the RAN system and power consumption may decrease, and as a result, CAPEX and OPEX may be reduced.

In an embodiment of the present disclosure, to achieve server resource efficiency, the RAN system 120 may implement vDU scaling, which involves dynamic scale-out and scale-in operations of DUs in response to traffic fluctuations. In the case of scaling-out, a DU 124_4 may be newly created in the RAN system 120. However, the present disclosure is not limited thereto. For example, the DU 124_4 may already be present in the RAN system 120 without being associated with the RU 128_6, and the scaling-out may allow the DU 124_4 to be newly associated with the RU 128_6. In the case of scaling-in, the DU 124_4 may already exist within the RAN system 120.

Through the vDU scaling, a first cell (or a first cell site) whose data has been processed by a source DU may be migrated from the source DU to a target DU, and the first cell may be referred to as a target cell. For example, before the vDU scaling, traffic from the first cell may be processed by the source DU, and after the vDU scaling, the traffic from the first cell may be processed by the target DU.

In an embodiment of the present disclosure, the scale-out may mean that a new DU (for example, a target DU or DU 124_4) is added into a DU pool corresponding to the CU 122. For example, when the amount of traffic to be processed by a source DU (e.g., DU 124_3) included in the DU pool increases, a target DU (e.g., DU 124_4) may be added to the DU pool. The addition of the DU 124_4 to the DU pool may mean that a processing pod corresponding to the DU 124_4 is added to the DU pool. For example, the addition of the DU 124_4 to the DU pool may mean that an additional server capable of processing data starts operating. When the data processing capacity or performance of the DU 124_3 (e.g., an existing server) reaches a limit, through scale-out, the DU 124_4 (as a non-limiting example, a server of similar specifications) may be added to the RAN system 120. In this case, a cell previously processed by the DU 124_3 may be migrated from the DU 124_3 to the DU 124_4 such that the data of the cell is handled by DU 124_4.

In the embodiment illustrated in FIG. 1, when the traffic increases, the load on the DU 124_3 may need to be shared with the DU 124_4. Accordingly, scale-out may be performed. In this case, the DU 124_3 may correspond to a source DU, and the DU 124_4 may correspond to a target DU. Before the scale-out, traffic from a first cell attached to the RU 128_6 may be processed by the DU 124_3, and after the scale-out, the traffic from the first cell attached to the RU 128_6 may be processed by the DU 124_4. The performance of the RAN system 120 may be improved by the scale-out.

In an embodiment of the present disclosure, a scale-in may mean that a DU included in the DU pool for CU 122 is removed. For example, the amount of traffic to be processed by the DUs included in the DU pool decreases, a target DU (e.g., the DU 124_4) may be removed from the DU pool. The removal of the DU 124_4 from the DU pool may mean that a processing pod corresponding to the DU 124_4 is removed. For example, the removal of the DU 124_4 to the DU pool may mean that a server processing data stops operating. By using scale-in, the number of servers that no longer need to operate may be reduced, thereby saving resources. Through the scale-in, a target cell previously processed by the target DU may be migrated to the source DU. For example, through the scale-in, a cell processed by the DU 124_4 may be migrated from the DU 124_4 to the DU 124_3, and accordingly, the data of the cell may be processed by the DU 124_3.

In the embodiment illustrated in FIG. 1, as traffic decreases, the amount of traffic processed by the DU 124_4 also drops, which may eliminate the need to operate the DU 124_4. Accordingly, scale-in may be performed. In this case, the DU 124_3 may correspond to a target DU, and the DU 124_4 may correspond to a source DU. Before the scale-in, traffic from a second cell attached to the RU 128_6 may be processed by the DU 124_4, and after the scale-in, the traffic from the second cell attached to the RU 128_6 may be processed by the DU 124_3. The resources of the RAN system 120 may be saved by the scale-in.

In an embodiment of the present disclosure, the DU 124_3 and the DU 124_4 may be connected to each other by an inter-DU interface (Xd interface) 126.

In an embodiment of the present disclosure, in addition to scaling by adding the DU 124_4 to or removing the DU 124_4 from the DU pool, it may also possible to migrate a target cell to the DU 124_4 from another DU, or vice versa. For example, a cell processed by the DU 124_4 may be migrated from the DU 124_4 to the DU 124_3 such that the data of the cell is processed by the DU 124_3, or a cell processed by the DU 124_3 may be migrated from the DU 124_3 to the DU 124_4 such that the data of the cell is processed by the DU 124_4. For example, a cell may be migrated from the DU 124_3, which has a high traffic volume, to the DU 124_4, which has relatively lower traffic. This may allow the DU 124_4 to process the data of the cell, thereby improving the efficiency of the RAN system 200.

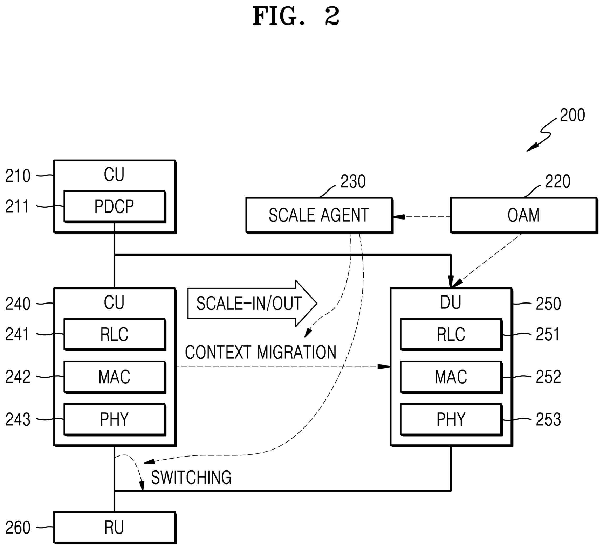

FIG. 2 is a diagram illustrating an example of cell migration from a first DU to a second DU in a RAN system according to an embodiment of the present disclosure. Referring to FIG. 2, the RAN system 200 may include a CU 210, an operations, administration, and maintenance (OAM) module 220, a scale agent 230, DUs 240 and 250, and an RU 260. In an embodiment of the present disclosure, the RAN system 200 may include a vRAN system, and in this case, the CU 210 may be implemented as a vCU, and the DUs 240 and 250 may be implemented as vDUs.

The CU 210 may be an entity including a PDCP layer. The PDCP layer of the CU 210 may include at least one PDCP entity 211. The CU 210 may transmit data from the DUs 240 and 250 to a network (not shown).

The OAM module 220 may determine a scaling status for the DU 240. The scaling status may include a scale-out and a scale-in. The OAM module 220 may determine whether to perform a scale-out or a scale-in with respect to the DU 240. Based on the determination, the OAM module 220 may decide a scaling status. The OAM module 220 may inform the scale agent 230 of the decided scaling status.

The OAM module 220 may determine whether to migrate a target cell associated with the DU 240 to the DU 250. Based on the determination to migrate the target cell to the DU 250, the OAM module 220 may request the scale agent 230 to migrate the target cell from the DU 240 to the DU 250.

In an embodiment of the present disclosure, the OAM module 220 may determine to perform a scale-out with respect to the DU 240 to add a new DU (for example, the DU 250) to the DU pool including the DU 240. Based on the determination, the OAM module 220 may decide the scaling status as a scale-out. In an embodiment of the present disclosure, the OAM module 220 may determine to perform scale-in with respect to the DU 240 to remove the DU 240 from the DU pool including the DU 240. Based on the determination, the OAM module 220 may decide the scaling status as a scale-in.

Based on the determination to perform a scale-out with respect to the DU 240, the OAM module 220 may create a new DU. For example, the OAM module 220 may set up (or configure) a new DU 250 within the DU pool including the DU 240. The OAM module 220 may configure the DU 250 on an existing server apparatus that is in operation. The OAM module 220 may initiate the operation of an additional server apparatus and configure the second DU 250 on the server apparatus. Based on the determination to perform a scale-out with respect to the DU 240, the OAM module 220 may activate the DU 250 which has been inactive prior to the scale-out.

The OAM module 220 may configure the connection between the DU 250 and the CU 210. In an embodiment of the present disclosure, the OAM module 220 may register the DU 250 with a midhaul splitter (not shown) for the CU 210. For example, the OAM module 220 may configure (or create) a midhaul path (interface) connecting the DU 250 with the CU 210. The midhaul splitter for the CU 210 may be an entity outside the CU 210 or an entity inside the CU 210.

The OAM module 220 may configure the connection between the DU 250 and an RU 270. In an embodiment of the present disclosure, the OAM module 220 may register the DU 250 with a fronthaul splitter (not shown) for the RU 270. For example, the OAM module 220 may configure (or create) a fronthaul path (interface) connecting the DU 250 with the RU 270. The fronthaul splitter for the RU 260 may be an entity outside the RU 260 or an entity inside the RU 260.

The scale agent 230 may migrate the target cell associated with the DU 240 to the DU 250. For example, the scale agent 230 may receive a request from the OAM module 220 to migrate the target cell from the DU 240 to the DU 250, and in response to the request, the scale agent 230 may perform operations to migrate the target cell from the DU 240 to the DU 250. Before the migration to the DU 250, the data of the target cell may be processed by the DU 240, and after the migration to the DU 250, the data of the target cell may be processed by the DU 250.

In an embodiment of the present disclosure, the scale agent 230 may identify the target cell to be migrated from the DU 240 to the DU 250. The target cell may be selected by the scale agent 230 or the OAM module 220 from one or more cells associated with the DU 240. However, the present disclosure is not limited thereto. For example, the target cell may be selected based on information about the DU 240 (for example, processing capacity, residual resources, or traffic of the DU 240), information about the DU 250, information about each cell associated with the DU 240 (for example, cell traffic), etc. The target cell may be selected arbitrarily from among one or more cells associated with the DU 240. The scale agent 230 may select any one cell from among the one or more cells associated with the DU 240 and identify the selected cell as a target cell. The scale agent 230 may receive a request from the OAM module 220 to migrate the target cell from the DU 240 to the DU 250, and based on the request, the scale agent 230 may identify the target cell.

In an embodiment of the present disclosure, the scale agent 230 may receive (or obtain) information about a scaling status from the OAM module 220. Based on the information about the scaling status, the scale agent 230 may identify the scaling status as either a scale-out or a scale-in. Based on the identified scaling status, the scale agent 230 may migrate the target cell associated with the DU 240 to the DU 250.

The scale agent 230 may migrate contexts included in the DU 240 to the DU 250. The contexts included in the DU may include at least one of system information, scheduling contexts, control information, frequency resource information, spatial resource information, UC contexts, or RU contexts. In an embodiment of the present disclosure, the scale agent 230 may migrate contexts of a target cell included in an RLC entity 241, an MAC entity 242, or a PHY entity 243 of the DU 240 to an RLC entity 241, an MAC entity 252, or the PHY entity 253 of the second DU 250. For example, the scale agent 230 may synchronize cell contexts or UE contexts for the target cell of the DU 240 with the DU 250.

The scale agent 230 may control paths (or interfaces) among the CU 210, the DU 240, the DU 250, and the RU 260. For example, the scale agent 230 may switch a fronthaul path (interface) between the RU 260 and the DU 240 to a fronthaul path between the RU 260 and the DU 250 for the target cell. The scale agent 230 may switch a path between the RU 260 and the PHY entity 243 of the DU 240 to a path between the RU 260 and the PHY entity 253 of the DU 250 for the target cell. Accordingly, the target cell may communicate with the DU 250 instead of the DU 240 via the RU 260.

In an embodiment of the present disclosure, for the target cell, the scale agent 230 may release the fronthaul path between the DU 240 and the RU 260 and establish the fronthaul path between the DU 250 and the RU 260. Accordingly, the RU 260 may be connected to a single DU via the fronthaul path for the target cell.

In an embodiment of the present disclosure, an RU associated with a plurality of cells may be connected to a first DU for a first cell and to a second DU for a second cell. In this embodiment, the RU may be connected to a plurality of DUs via a plurality of fronthaul paths on a per-cell basis. For example, a different fronthaul path may be established for each cell. In an embodiment of the present disclosure, a single DU may also be connected to a plurality of RUs via a plurality of fronthaul paths.

The scale agent 230 may switch a midhaul path (interface) between the CU 210 and the DU 240 to a midhaul path between the CU 210 and the DU 250 for the target cell. The scale agent 230 may switch a path between the CU 210 and the RLC entity 241 of the DU 240 to a path between the CU 210 and the RLC entity 251 of the DU 250 for the target cell. For example, the scale agent 230 may switch an F1-U path between the CU 210 and the RLC entity 241 of the DU 240 to a path between the CU 210 and the RLC entity 251 of the DU 250 for the target cell.

In an embodiment of the present disclosure, for the target cell, the scale agent 230 may release the midhaul path between the DU 240 and the CU 210 and establish the midhaul path between the DU 250 and the CU 210. Accordingly, the CU 210 may be connected to a single DU via the midhaul path for the target cell.

In an embodiment of the present disclosure, a CU associated with a plurality of cells may be connected to a first DU for a first cell and to a second DU for a second cell. In this embodiment, the CU may be connected to a plurality of DUs via a plurality of midhaul paths on a per-cell basis. For example, a different midhaul path may be established for each cell. The midhaul path may be established independently for each UE attached to the target cell. In an embodiment of the present disclosure, a single DU may also be connected to a plurality of CUs via a plurality of midhaul paths.

In an embodiment of the present disclosure, the DU 240 may include the RLC entity 241, the MAC entity 242, and the PHY entity 243. The RLC entity 241 may be included in an RLC layer of the DU 240. The RLC entity 241 may include (store) UE contexts for one or more UEs communicating with the RU 260 or cell contexts for one or more cells communicating with the RU 260. The RLC entity 241 may function as the RLC layer of the DU 240. The RLC entity 241 may be connected to the CU 210 via the midhaul path between the CU 210 and the DU 240. The MAC entity 242 may be included in an MAC layer of the DU 240. The MAC entity 242 may include cell contexts for one or more cells communicating with the RU 260. The MAC entity 242 may function as the MAC layer of the DU 240. The PHY entity 243 may be included in a PHY layer of the DU 240. The PHY entity 243 may function as the PHY layer of the DU 240. The PHY entity 243 may include cell contexts for one or more cells communicating with the RU 260. The PHY entity 243 may be connected to the RU 260 via the fronthaul path between the PHY entity 243 and the RU 260. The DU 240 may include a plurality of RLC entities, a plurality of MAC entities, or a plurality of PHY entities.

In an embodiment of the present disclosure, the DU 250 may include the RLC entity 251, the MAC entity 252, and the PHY entity 253. The RLC entity 251 may be included in an RLC layer of the DU 250. The RLC entity 251 may function as the RLC layer of the DU 250. By the path switching performed by the scale agent 230, the RLC entity 251 may be connected to the CU 210 via the midhaul path between the CU 210 and the DU 250. By the scale agent 230, the cell contexts or the UE contexts included in the RLC entity 241 of the DU 240 may be migrated to the RLC entity 251 of the DU 250. The MAC entity 252 may be included in an MAC layer of the DU 250. The MAC entity 252 may function as the MAC layer of the DU 250. By the scale agent 230, the cell contexts included in the MAC entity 242 of the DU 240 may be migrated to the MAC entity 252 of the DU 250. The PHY entity 243 may be included in a PHY layer of the DU 240. The PHY entity 253 may function as the PHY layer of the DU 250. By the scale agent 230, the cell contexts included in the PHY entity 243 of the DU 240 may be migrated to the PHY entity 253 of the DU 250. By the path switching performed by the scale agent 230, the PHY entity 253 may be connected to the RU 260 via the fronthaul path between the PHY entity 253 and the RU 260. The DU 250 may include a plurality of RLC entities, a plurality of MAC entities, or a plurality of PHY entities.

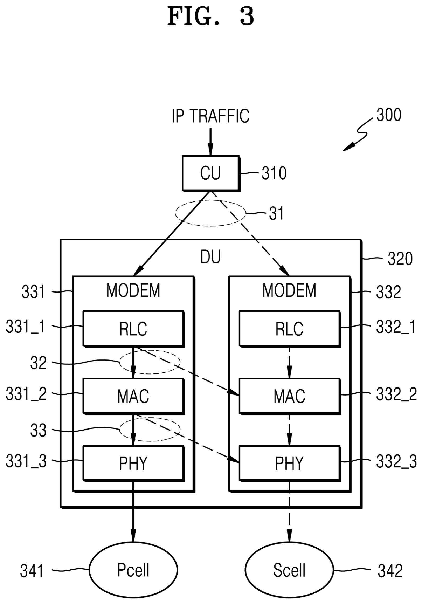

FIG. 3 is a diagram illustrating an example of carrier aggregation (CA) according to an embodiment of the present disclosure. Referring to FIG. 3, a RAN system 300 may include a CU 310, a DU 320, a primary cell (PCell) 341, and a secondary cell (SCell) 342. The RAN system 300 may support aggregation of a plurality of component carriers.

A UE may communicate with a core network via the PCell 341 and the SCell 342. The PCell 341 and the SCell 342 may be cells for data reception/transmission between entities in the RAN system 300. The PCell 341 and the SCell 342 may use different frequency bands from each other. For example, the PCell 341 and the SCell 342 may correspond to different component carriers from each other. The SCell 342 may offload traffic from the PCell 341 or provide coverage in areas where coverage of the PCell 341 is limited. For example, the PCell 341 may provide the UE with connectivity (e.g., connectivity with other entities within the RAN system 300, such as the core network) and traffic transmission. In contrast, the SCell 342 may only deliver traffic from the UE to other entities within the RAN system 300. For example, the PCell may correspond to a serving cell in which the terminal has established a radio resource control (RRC) connection with the core network.

The DU 320 may include modems (331 and 332) to support communication with the PCell 341 and the SCell 342. The modem 331 may serve the PCell 341, and the modem 332 may server the SCell 342. The modem 331 may include an RLC entity 331_1 included in an RLC layer of the modem 331, an MAC entity 331_2 included in an MAC layer of the modem 331, and a PHY entity 331_3 included in a PHY layer of the modem 331. The modem 332 may include an RLC entity 332_1 included in an RLC layer of the modem 332, an MAC entity 332_2 included in an MAC layer of the modem 332, and a PHY entity 332_3 included in a PHY layer of the modem 332. The modems 331 and 332 may be implemented as software on the DU 320. However, the present disclosure is not limited thereto. Although the embodiment of FIG. 3 illustrates that the modems 331 and 332 are implemented on a single DU 320, the modems 331 and 332 may be implemented on different DUs from each other.

To support CA, the RAN system 300 may split internet protocol (IP) traffic to the PCell 341 and the SCell 342 by using any one of various split methods (31, 32, and 33). In the method 31, the IP traffic may be split at the PCDP layer of the CU 310. For example, the IP traffic from the core network may be split based on the PDCP layer of the CU 310, and accordingly, the IP traffic for the PCell 341 may be delivered to modem 331, while the IP traffic for the SCell 342 is delivered to modem 332.

In the method 32, the IP traffic may be split at the RLC layer. For example, the IP traffic from the core network may be split at the RLC layer (e.g., the RLC entity 331_1 included in the RLC layer) of the modem 331 for the PCell 341 of the DU 320. Accordingly, the IP traffic for the PCell 341 may be delivered to the MAC layer (e.g., the MAC entity 331_2 included in the MAC layer) of the modem 331, and the IP traffic for the SCell 341 may be delivered to the MAC layer (e.g., the MAC entity 332_2) of the modem 332.

In the method 33, the IP traffic may be split at the MAC layer. For example, the IP traffic from the core network may be split at the MAC layer (e.g., the MAC entity 331_2) of the modem 331 for the PCell 341 of the DU 320. Accordingly, the IP traffic for the PCell 341 may be delivered to the PHY layer (e.g., the PHY entity 331_3) of the modem 331, and the IP traffic for the SCell 341 may be delivered to the PHY layer (e.g., the PHY entity 332_2) of the modem 332.

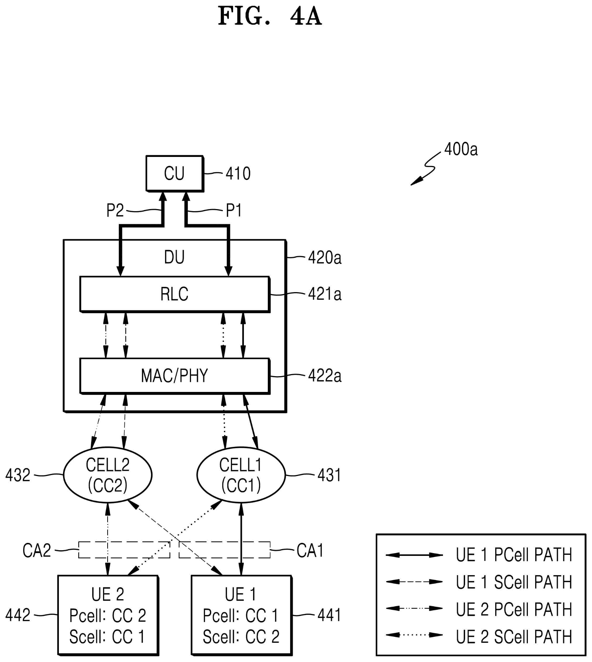

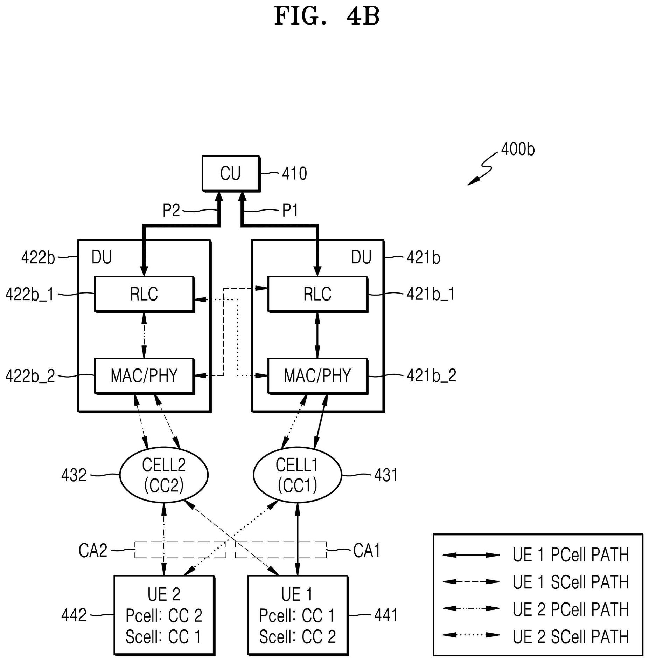

In an embodiment of the present disclosure, the RAN system supporting CA may split the traffic for the PCell and the SCell according to the method 32. Accordingly, the efficiency of control information exchange between protocol entities may be improved, and communication overhead may be reduced. Hereinafter, implementation scenarios of a RAN system supporting CA based on the method 32 will be described with reference to FIGS. 4A and 4B.

FIG. 4A is a diagram illustrating an example of carrier-aggregated cells according to an embodiment of the present disclosure. Referring to FIG. 4A, in a RAN system 400a supporting CA, a cell 431 and a cell 432 may be carrier-aggregated cells. For example, a UE 441 and a UE 442 may communicate with a DU 420a and a CU 410 through the cells 431 and 432. The PCell of the UE 441 may be the cell 431 corresponding to a component carrier "CC1," and the SCell of the UE 441 may be the cell 432 corresponding to a component carrier "CC2." To support communication between the UE 441 and the core network, the component carriers "CC1" and "CC2" may be aggregated and provided to the UE 441 (CA1). The PCell of the UE 442 may be the cell 432 corresponding to the component carrier "CC2," and the SCell of the UE 442 may be the cell 431 corresponding to the component carrier "CC1." To support communication between the UE 442 and the core network, the component carriers "CC2" and "CC1" may be aggregated and provided to the UE 442 (CA2).

For convenience of illustration, only two cells (431 and 432) are shown in FIG. 4A. However, the number of carrier-aggregated cells is not limited thereto. The RAN system 400a may process three or more cells, and these cells may be processed by the DU 420a.

In the embodiment illustrated in FIG. 4A, a model processing the traffic from the PCell, and a model processing the traffic from the SCell may be implemented in a single DU 420a. The configuration illustrated in FIG. 4A may be understood as an intra-DU CA scenario.

The DU 420a may include an RLC entity 421a and an MAC/PHY entity 422a. The RLC entity 421a may function as an RLC layer of the DU 420a. The MAC/PHY entity 422a may function as an MAC layer and a PHY layer of the DU 420a. The MAC/PHY entity 422a may include an entity performing MAC functions and an entity performing PHY functions.

The "UE 1 PCell path" may be understood as a data path for "UE 1" (i.e., the UE 441) to communicate with the core network via the PCell (i.e., the cell 431) using the component carrier "CC1." For example, data transmitted from the UE 441 to the cell 431 via the component carrier "CC1" may be transmitted to the CU 410 through a UE 1 PCell path" between the UE 441 and the cell 431, a "UE 1 PCell path" between the cell 431 and the MAC/PHY entity 422a, a "UE 1 PCell path" between the MAC/PHY entity 422a and the RLC entity 421a, and a midhaul path P1 for the cell 431 between the RLC entity 421a and the CU 410. The data from the UE 441 transmitted to the CU 410 may be transmitted to the core network via the CU 410.

Similarly, a "UE 1 SCell path" may be understood as a data path for "UE 1" (i.e., the UE 441) to communicate with the core network via the SCell (i.e., the cell 432). A "UE 2 PCell path" may be understood as a data path for "UE 2" (i.e., the UE 442) to communicate with the core network via the PCell (i.e., the cell 432) using the component carrier "CC2." The "UE 1 PCell path" may be understood as a data path for "UE 1" (i.e., the UE 441) to communicate with the core network via the PCell (i.e., the cell 431) using the component carrier "CC1." A "UE 2 SCell path" may be understood as a data path for "UE 2" (i.e., the UE 442) to communication with the core network via the SCell (i.e., the cell 431).

As described above, the RAN system 400a may be implemented according to the method 32 of FIG. 3. For example, the CU 410 may transmit the IP traffic for the UE 441 from the core network to the RLC entity 421a of the DU 420a through the path P1. The path P1 may correspond to the midhaul path (interface) for the UE 441 between the CU 410 and the DU 420a. The RLC entity 421a may split the IP traffic for the UE 441 from the CU 410. For example, the RLC entity 421a may transmit data to be processed by the PCell among the IP traffic for the UE 441 to the MAC/PHY entity 422a through the "UE 1 PCell path" between the RLC entity 421a and the MAC/PHY entity 422a. The RLC entity 421a may transmit data to be processed by the SCell among the IP traffic for the UE 441 to the MAC/PHY entity 422a through the "UE 1 SCell path" between the RLC entity 421a and the MAC/PHY entity 422a. Similarly, the CU 410 may transmit the IP traffic for the UE 442 from the core network to the RLC entity 421a of the DU 420a through a path P2. The path P2 may correspond to the midhaul path (interface) for the UE 442 between the CU 410 and the DU 420a. The RLC entity 421a may split the IP traffic for the UE 442 from the CU 410.

The cell 431 may process data transmitted via the component carrier "CC1" among the data from the UE 441 and the data from UE 442. The cell 431 may process data received from the DU 420a and transmit the processed data to the UE 441 or the UE 442 via the carrier "CC1." The cell 432 may process data transmitted via the component carrier "CC2" among the data from the UE 441 and the data from UE 442. The cell 432 may process data received from the DU 420a and transmit the processed data to the UE 441 or the UE 442 via the carrier "CC2."

FIG. 4B is a diagram illustrating an example of a carrier-aggregated first cell and second cell according to an embodiment of the present disclosure. Referring to FIG. 3B, in a RAN system 400b supporting CA, a model processing traffic from the PCell and a model processing traffic from the SCell may be implemented in different DUs from each other. For example, traffic from the PCell (i.e., the cell 431) of the UE 441 may be processed by a DU 421b, and traffic from the SCell (i.e., the cell 432) of the UE 441 may be processed by a DU 422b. The configuration illustrated in FIG. 4B may be understood as an inter-DU CA scenario.

For convenience of illustration, only two cells (431 and 432) and two DUs (721 and 722) are shown in FIG. 4B. However, the numbers of carrier-aggregated cells and DUs are not limited thereto. The RAN system 400b may process three or more cells, and there may be three or more DUs in the DU pool of the RAN system 400b for processing the cells together.

In the embodiment illustrated in FIG. 4B, the RAN system 400b may include the DU 421b for the cell 431 and the DU 422b for the cell 432. The DU 421b may include an RLC entity 421b_1 and an MAC/PHY entity 421b_2. The RLC entity 421b_1 may function as an RLC layer of the DU 421b. The MAC/PHY entity 421b_2 may function as an MAC layer and a PHY layer of the DU 421b. The MAC/PHY entity 421b_2 may include an entity performing MAC functions and an entity performing PHY functions.

As described above, the RAN system 400b may be implemented according to the method 32 of FIG. 3. For example, the CU 410 may transmit the IP traffic for the UE 441 from the core network to the RLC entity 421b_1 of the DU 421b through the path P1. The path P1 may correspond to the midhaul path (interface) for the UE 441 between the CU 410 and the DU 421b. The RLC entity 421b_1 may split the IP traffic for the UE 441 from the CU 410. For example, the RLC entity 421b_1 may transmit data to be processed by the PCell among the IP traffic for the UE 441 to the MAC/PHY entity 421b_2 through the "UE 1 PCell path" between the RLC entity 421b_1 and the MAC/PHY entity 421b_2. The RLC entity 421b_1 may transmit data to be processed by the SCell among the IP traffic for the UE 441 to the MAC/PHY entity 421b_2 through the "UE 1 SCell path" between the RLC entity 421b_1 and the MAC/PHY entity 421b_2. Similarly, the CU 410 may transmit the IP traffic for the UE 442 from the core network to an RLC entity 422b_1 of the DU 422b through the path P2. The path P2 may correspond to the midhaul path for the UE 442 between the CU 410 and the DU 422b. The RLC entity 422b_1 may split the IP traffic for the UE 442 from the CU 410 and transmit the split traffic to each of an MAC/PHY entity 422b_2 and the MAC/PHY entity 421b_2.

In a RAN system that does not support CA, a scale agent may migrate a service for a specific cell served by an RU from a target DU to a source DU, without considering communication with other cells. However, in a RAN system supporting CA (e.g., the RAN system 400a of FIG. 4A and the RAN system 400b of FIG. 4B), when migrating a service for a specific cell from a target DU to a source DU, as a plurality of cells are carrier-aggregated, it may be necessary to consider the flow control of user plane traffic between a cell migrated to the target DU and a cell remaining in the source DU.

Although the MAC entity and the PHY entity are integrated into the "MAC/PHY entity" in FIGS. 4A, 4B, 7A to 7C, 8A to 8C, and 10A to 10C for convenience of illustration, it should be understood that the MAC entity and the PHY entity may also be configured independently as separate entities. For example, in the embodiment of FIG. 4A, the MAC/PHY entity 422a may exist independently as an MAC entity and a PHY entity that are separated from each other. In the embodiment of FIG. 4B, the MAC/PHY entity 422b_2 and the MAC/PHY entity 421b_2 may exist independently as an MAC entity and a PHY entity that are separated from each other.

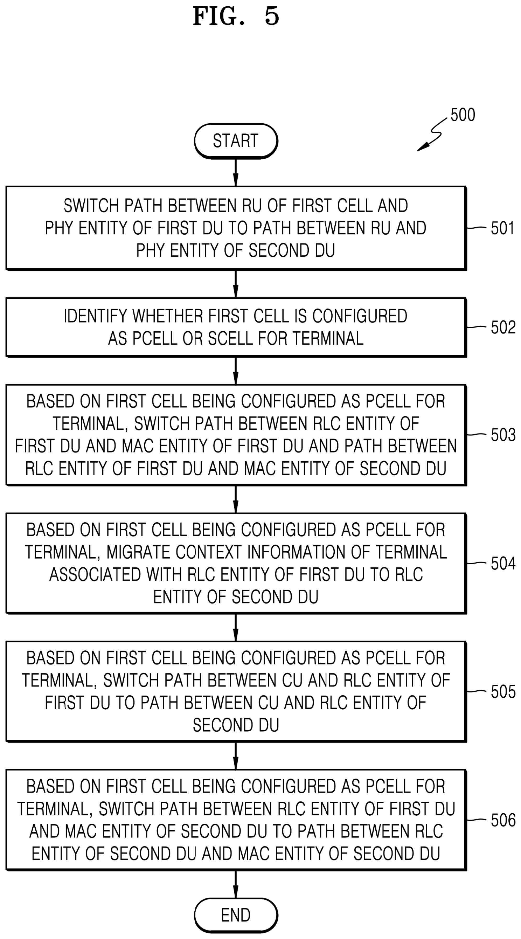

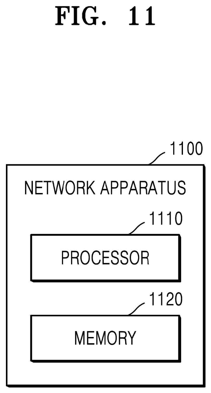

FIG. 5 is a diagram illustrating an example of a method of scaling at least one DU by a network apparatus supporting aggregation of a plurality of cells including a first cell and a second cell according to an embodiment of the present disclosure. Referring to FIGS. 2 and 5, a method 500 of scaling at least one DU according to an embodiment of the present disclosure may include operations 501 to 506. In an embodiment of the present disclosure, the method 500 may be performed by a network apparatus of a RAN system. For example, the method 500 may be performed by a network apparatus that manages scaling of a DU, such as the scale agent 230 of FIG. 2. The method 500 may be performed by a network apparatus 1100 of FIG. 11. In an embodiment of the present disclosure, operations 501 to 506 of the method 500 may be performed by at least one processor included in an electronic apparatus. The method 500 is not limited to the description of FIG. 5, and in one or more embodiments, the method 500 may further include operations that are not shown in FIG. 5, or some of the operations of FIG. 5 may be omitted from the method 500.

In the embodiment of FIG. 2, as the scale agent 230 performs the method 500, the first cell in the RU 260 may communicate with the DU 250 instead of the DU 240. For example, as the scale agent 230 performs the method 500, the first cell which has communicated with the CU 210 via the DU 240 may now communicate with the CU 210 via the DU 250 instead of the DU 240. In this example, the DU 240 may be understood as a source DU, the DU 250 may be understood as a target DU, and the first cell may be understood as a target cell.

A network apparatus according to an embodiment of the present disclosure may switch a path between an RU of a first cell and a PHY entity of a first DU to a path between the RU and a PHY entity of a second DU (501). For example, in the embodiment of FIG. 2, the scale agent 230 may switch the fronthaul path between the first DU and the RU of the first cell to be connected between the RU of the first cell and the second DU. The scale agent 230 may switch (or change) the fronthaul path connected between the DU 240 and the RU 260 to be connected between the DU 250 and the RU 260. The scale agent 230 may release the fronthaul path connected between the DU 240 and the RU 260 and establish a fronthaul path between the second DU 250 and the RU 260. Then, the scale agent 230 may perform operation 502.

In an embodiment of the present disclosure, when the first cell has not been communicating with the second DU prior to operation 501 (for example, when the RU 260 has not been communicating with the DU 250 prior to operation 501), the second DU (e.g., the DU 250) may be configured either preceding operation 501 or following operation 501. The configuration of the second DU may be performed by the network apparatus configured to perform functions for managing and maintaining the RAN system. For example, in the embodiment of FIG. 2, the OAM module 220 may initiate the DU 250. The OAM module 220 may initiate the DU 250 by creating (configuring), establishing, setting up, and activating the DU 250. The OAM module 220 may set up an F1 interface (midhaul path or midhaul interface) between the DU 250 and the CU 210. The OAM module 220 may create a connection between the PDCP entity 211 of the CU 210 and the RLC entity 251 of the DU 250. Then, the scale agent 230 may set up cell contexts of the first cell for the DU 250. The cell contexts may include information for setting up or managing connections with UEs connected (or attached) to the first cell. For example, the cell contexts of the first cell may include information for data communication of UEs attached to the first cell, such as a frequency band of the first cell, a radio resource scheduling method of the first cell, or common signals transmitted to the UEs attached to the first cell.

In an embodiment of the present disclosure, the RAN system 200 may further include a midhaul splitter (not shown). The CU 210 and the DU 240 may communicate with each other via the midhaul splitter. For example, each of the CU 210 and the DU 240 may include an F1 message handler, and the F1 message handler of the CU 210 and the F1 message handler of the DU 240 may be connected to each other via the midhaul splitter. Similarly, the DU 250 may also include an F1 message handler. By registering the F1 message handler of the DU 250 with midhaul splitter, the OAM module 220 may set up a midhaul path between the DU 250 and the CU 210.

The network apparatus according to an embodiment of the present disclosure may identify whether the first cell is configured as a PCell or an SCell for the terminal (e.g., a first UE) (502). For example, in the embodiment of FIG. 2, the scale agent 230 may obtain from the DU 240 information indicating whether the first cell is a PCell or an SCell for each of the UEs communicating with the DU 240. Based on the obtained information, the scale agent 230 may identify (or determine) whether the first cell is configured as a PCell or an SCell for the first UE. For example, based on the obtained information, the scale agent 230 may identify at least one of the PCell or the SCell of the first UE.

In an embodiment of the present disclosure, the information indicating whether the first cell is a PCell or an SCell of the first UE may be stored in an MAC scheduler (not shown). The MAC scheduler may be arranged inside the DU 240 (e.g., the MAC entity 242) or outside the DU 240. The MAC scheduler may store information indicating a cell configured as a PCell and a cell configured as an SCell for each of the UEs communicating with the DU 240, information indicating whether the first cell is configured as a PCell or an SCell for each of the UEs communicating with the DU 240, or information indicating whether each of the cells communicating with the DU 240 is configured as a PCell or an SCell for each of the UEs communicating with the DU 240. The scale agent 230 may obtain from the MAC scheduler information indicating whether the first cell is a PCell of the first UE or an SCell of the first UE. Based on the obtained information, the scale agent 230 may identify whether the first cell is configured as the PCell for the first UE or the SCell for the first UE.

In an embodiment of the present disclosure, prior to operation 503, the network apparatus may migrate a cell context corresponding to the first cell, which is included in at least one of the RLC entity, the MAC entity, and the PHY entity of the first DU to a corresponding entity among the RLC entity, the MAC entity, and the PHY entity of the second DU. For example, in the embodiment of FIG. 2, when configuring the cell context of the first cell for at least one of the RLC entity 241, the MAC entity 242, and the PHY entity 243 of the DU 240, the scale agent 230 may store at least one parameter used for the configuration of the first cell. The scale agent 230 may generate a cell context of a first cell for at least one of the RLC entity 241, the MAC entity 242, and the PHY entity 243 based on at least one stored parameter, and set the generated cell context in a corresponding entity from among the RLC entity 251, the MAC entity 252, and the PHY entity 253 of the DU 250. For example, the scale agent 230 may copy the cell context corresponding to the first cell, that is included in at least one of the RLC entity 241, the MAC entity 242, and the PHY entity 243 of the DU 240 to a corresponding entity (251/252/253) of the DU 250.

In an embodiment of the present disclosure, before operation 503 is performed, the network apparatus may migrate an MAC context for the first cell, that is included in at least one of the MAC entity and the PHY entity of the first DU, to a corresponding entity of the second DU. For example, in the embodiment of FIG. 2, the scale agent 230 may migrate the MAC context for the first cell, that is included in at least one of the MAC entity 242 and the PHY entity 243 of the DU 240 to a corresponding entity of the DU 250. The scale agent 230 may copy the MAC contexts for all UEs attached to the first cell to the DU 250.

In an embodiment of the present disclosure, based on the first cell being configured as a PCell for the terminal, the network apparatus may switch a path between the RLC entity of the first DU and the MAC entity of the first DU to a path between the RLC entity of the first DU and the MAC entity of the second DU (503). For example, in the embodiment of FIG. 2, in operation 503, the scale agent 230 may identify that the first cell is configured as a PCell for the first UE, and based on the identification, the scale agent 230 may switch (or change) the path between the RLC entity 241 of the DU 240 and the MAC entity 242 of the DU 240. The scale agent 230 may switch the path between the RLC entity 241 of the DU 240 and the MAC entity 242 of the DU 240 for the first UE to be connected between the RLC entity 241 of the DU 240 and the MAC entity 252 of the DU 250.

In operation 503, the switched path may be a data path for communication between the terminal and the CU 210 via the first cell. For example, the first UE may communicate with the core network via the CU 210 through the first cell and the switched path. In this embodiment, the switched path may be understood as a data path for a PCell (i.g., the first cell) of the terminal. For example, a message, data, or traffic from the terminal may be transmitted to the core network through the PCell (i.e., the first cell) of the terminal, the RU 260, the fronthaul path, the switched path, the midhaul path, and the CU 210. After operation 503, the data from the terminal may be transmitted to the CU 210 from the MAC entity of the second DU via the RLC entity of the first DU, through the switched path.

In an embodiment of the present disclosure, based on the first cell being configured as a PCell for the terminal, the network apparatus may migrate context information of the terminal, that is related to the RLC entity of the first DU to the RLC entity of the second DU 504. For example, in the embodiment of FIG. 2, when the first cell is a PCell of the first UE, the scale agent 230 may migrate UE contexts of the first UE that are included in the RLC entity 241 of the DU 240 to the RLC entity 251 of the DU 250.

In an embodiment of the present disclosure, based on the first cell being configured as a PCell for the terminal, the network apparatus may switch a path between the CU and the RLC entity of the first DU to a path between the CU and the RLC entity of the second DU (505). For example, when the first cell is a PCell for the first UE, in the embodiment of FIG. 2, the scale agent 230 may release the midhaul path (or F1-U interface, F1-U path) between the PDCP entity 211 of the CU 210 and the RLC entity 241 of the DU 240 and set up (or establish, create) a midhaul path (of F1-U interface, F1-U path) between the PDCP entity 211 and the RLC entity 251 of the DU 250.

In an embodiment of the present disclosure, based on the first cell being configured as a PCell for a terminal, the network apparatus may switch a path between the RLC entity of the first DU and the MAC entity of the second DU to a path between the RLC entity of the second DU and the MAC entity of the second DU (506). For example, in the embodiment of FIG. 2, when the first cell is a PCell for the first UE, the scale agent 230 may switch the path that has been switched to be connected between the RLC entity 241 of the DU 240 and the MAC entity 252 of the DU 250 in operation 503 to be connected between the RLC entity 251 of the DU 250 and the MAC entity 252 of the DU 250. After operation 506, the data from the terminal may be transmitted to the CU 210 from the MAC entity 252 of the DU 250 via the RLC entity 251 of the DU 250, through the switched path.

The network apparatus may at least partially migrate the first cell which is a target cell from the first DU to the second DU by performing the method 500. For example, in the embodiment of FIG. 2, after the scale agent 230 performs the method 500, the data transmitted from the terminal attached to the first cell to the PCell (i.e., the first cell) may be transmitted to the CU 210 via the DU 250 instead of the DU 240. The scale agent 230 may identify whether the first cell is configured as a PCell or an SCell for the terminal and switch based on the identification at least some of paths for the terminal between the RLC entity and the MAC entity. For example, the scale agent 230 may determine whether to switch the PCell data path for the terminal based on whether the first cell is configured as a PCell for the terminal. Accordingly, endpoints of the RLC entity and the MAC entity for the PCell data path of the terminal may depend on whether the first cell is configured as a PCell for the terminal.

In an embodiment of the present disclosure, the OAM module 220 may rapidly switch over the first cell from the DU 240 to the DU 250 within a predefined period of time (e.g., a reference time). For example, the OAM module 220 may simultaneously migrate the midhaul path, fronthaul path, and all cell and UE contexts included in each entity of the DU from the DU 240 to the second DU 240.

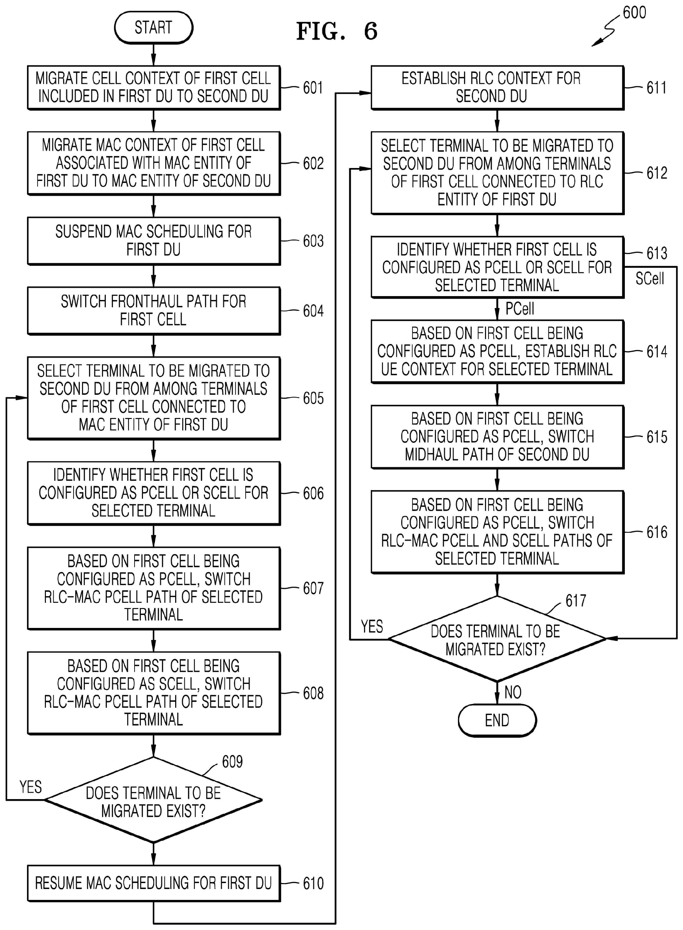

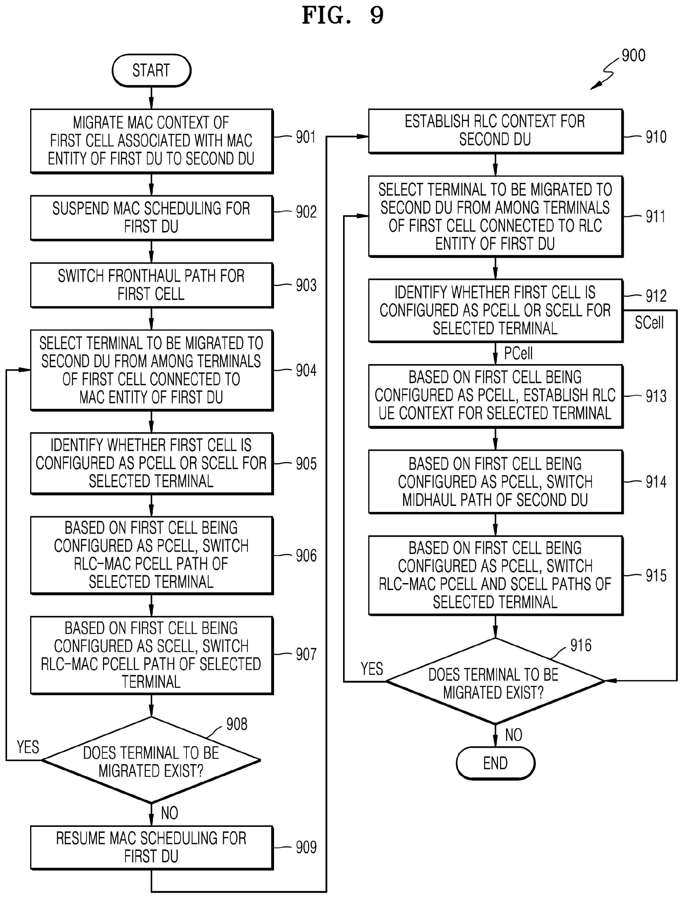

In an embodiment of the present disclosure, the OAM module 220 may notify the scale agent 230 of a scaling status. The OAM module 220 may determine (or identify) whether a scale-in or a scale-out is required for a source DU and determine (or identify) the scaling status as a scale-in or a scale-out based on the determination (or identification). The scale agent 230 may identify the scaling status notified by the OAM module 220 and perform any one of a method 600 of FIG. 6 or a method 900 of FIG. 9 based on the identified scaling status. For example, based on the identification of the scaling status as a scale-out, the scale agent 230 may perform the method 600 of FIG. 6. Based on the identification of the scaling status as a scale-in, the scale agent 230 may perform the method 900 of FIG. 9. The method 600 of FIG. 6 and the method 900 of FIG. 9 are to be described in detail.

FIG. 6 is a flowchart illustrating an example of a method of scaling out a first DU to a second DU, performed by a network apparatus according to an embodiment of the present disclosure. Referring to FIG. 6, the method 600 may include operations 601 to 617. The method 600 may be performed by a network apparatus of the RAN system. For example, the method 600 may be performed by the scale agent 230 of FIG. 2. The scale agent 230 may perform the method 600 based on the identification of the scaling status as a scale-out. Before the method 600 is performed, the first cell may communicate with the CU 210 via a corresponding RU (e.g., the RU 260) and the first DU (e.g., the DU 240). The method 600 may be a method for migrating the first cell from the first DU (which has not previously been communicating with the first cell) to the second DU. In an embodiment of the present disclosure, operations 601 to 617 of the method 600 may be performed by at least one processor included in an electronic apparatus. The method 600 is not limited to the description of FIG. 6, and in one or more embodiments, the method 600 may further include operations that are not shown in FIG. 6, or some of the operations of FIG. 6 may be omitted from the method 600.

In an embodiment of the present disclosure, before the method 600 is performed, the number of DUs capable of communicating with the first cell may be 1 or more. For example, before the method 600 is performed, there may be a plurality of source DUs that are capable of communicating with the first cell. The scale agent 230 may migrate the first cell (i.e., a target cell) from the first DU (i.e., a first source DU) to a second DU (i.e., a target DU) from among the plurality of source DUs by performing the method 600. For example, after the scale agent 230 performs the method 600, the first cell may communicate with the CU via the second DU instead of the first DU.

In an embodiment of the present disclosure, before the method 600 is performed, the second DU may have not existed in the DU pool of the RAN system 200 or may have existed but been deactivated. In this case, before the method 600 is performed, the second DU may be configured. The configuration of the second DU may be performed by the network apparatus configured to perform functions for managing and maintaining the RAN system. For example, in the embodiment of FIG. 2, the OAM module 220 may initiate the second DU. The OAM module 220 may create a second DU that did not exist or activate a deactivated second DU. The OAM module 220 may configure a midhaul path between the second DU and the CU 210. For example, the OAM module 220 may create (or configure, establish) a path between the PHY entity of the second DU and the CU 210.

In an embodiment of the present disclosure, the network apparatus may migrate the cell context of the first cell included in the first DU to the second DU (601). For example, the network apparatus may copy the cell context of the first cell included in the first DU (or at least one of a plurality of source DUs) to the second DU. The scale agent 230 may create the cell context of the first cell based on prestored parameters and configure the created cell context to the second DU.

In an embodiment of the present disclosure, the network apparatus may migrate the MAC context of the first cell associated with the MAC entity of the first DU to the MAC entity of the second DU (602). For example, the network apparatus may migrate or copy the MAC context for the first cell, which is included in at least one of the PHY entity and the MAC entity of the first DU (or at least one of a plurality of source DUs) to a corresponding entity of the second DU.

In an embodiment of the present disclosure, the network apparatus may cease the MAC scheduling for the first cell (603). For example, the network apparatus may control the MAC scheduler in the first DU to suspend the MAC scheduling for the first cell of the first DU. The network apparatus may at least partially suspend the MAC scheduling for the first DU. For example, the network apparatus may suspend the MAC scheduling or the first DU for at least a portion or all of cells communicating with the first DU, including the first cell. The network apparatus may perform operations 604 to 610 while the MAC scheduling for the first cell of the first DU is suspended.

In an embodiment of the present disclosure, the network apparatus may switch the fronthaul path for the first cell (604). For example, the network apparatus may switch (or change) the fronthaul path connected between the first DU and the RU including the first cell to be connected between the second DU and the RU. Accordingly, the path between the RU of the first cell and the PHY entity of the first DU may be switched to a path between the RU and the PHY entity of the second DU.

In an embodiment of the present disclosure, the network apparatus may select a terminal to be migrated to the second DU from among terminals of the first cell connected to the MAC entity of the first DU (605). For example, the network apparatus may arbitrarily select a single terminal to be migrated to the MAC entity of the second DU from among terminals (e.g., UEs) attached to the first cell and connected to the MAC entity of the first DU.

In an embodiment of the present disclosure, the network apparatus may determine a migration order for terminals attached to the first cell. The network apparatus may sequentially select terminals according to the determined migration order. For example, in operation6 605, the network apparatus may select a first terminal from among the terminals attached to the first cell, based on the determined migration order. Then, when operation 605 is performed again, the network apparatus may select a next terminal based on the determined migration order.

In an embodiment of the present disclosure, each terminal attached to the first cell may be allocated an identifier to be used for selection. For example, the network apparatus may allocate a unique identifier to the terminals attached to the first cell for selection. The network apparatus may use the allocated identifiers allocated to the terminals (e.g., radio network temporary identifiers (C-RNTI) or terminal identifiers stored in the UE context) as identifiers for selection. The scale agent may select any one of the terminals and remember an identifier of the selected terminal. For example, the network apparatus may manage a data structure for recording an identifier of a selected terminal. The data structure may be stored in a storage apparatus (or memory) inside or outside the network apparatus and may be managed by the network apparatus. Then, when operation 605 is performed again, the network apparatus may select a terminal that has not been selected, based on the remembered identifier.

In an embodiment of the present disclosure, the network apparatus may identify whether the first cell is configured as a PCell or an SCell for the terminal selected in operation 605 (606). For example, the network apparatus may obtain from the MAC scheduler information indicating whether the first cell is a PCell or an SCell of the selected terminal and identify, based on the obtained information, whether the PCell of the selected terminal is the first cell.

In an embodiment of the present disclosure, based on the first cell being configured as a PCell for the terminal selected in operation 605, the network apparatus may switch the path for the PCell between the RLC entity and the MAC entity of the selected terminal (607). For example, the network apparatus may switch the path for the PCell between the MAC entity and the RLC entity of the selected terminal (e.g., "RLC-MAC PCell path") to a path between the RLC entity and the MAC entity of the second DU. When the PCell of a terminal is the first cell, as shown in FIGS. 4A and 4B, the PCell data path between the RLC entity and MAC entity of the terminal may be a path for communication through the PCell of the terminal between the RLC entity and the MAC entity of the first DU. Accordingly, the network apparatus may switch the path between the RLC entity 241 and the MAC entity 242 of the first DU of the terminal. For example, the network apparatus may switch the path for the PCell between the RLC entity of the first DU and the MAC entity of the first DU of the selected terminal to be connected between the RLC entity of the first DU and the MAC entity of the second DU. Accordingly, an MAC endpoint of the PCell path between the RLC entity and the MAC entity of the selected terminal may be switched from the first DU to the second DU.

In an embodiment of the present disclosure, based on the first cell being configured as a PCell for the terminal selected in operation 605, the network apparatus may switch the path for the SCell between the RLC entity and the MAC entity of the selected terminal (608). As illustrated in FIGS. 4A and 4B, when the SCell of a terminal is the first cell, the SCell data path between the MAC entity and the RLC entity of the terminal may be a path for communication through the SCell of the terminal between the RLC entity of the first DU and the MAC entity of the first DU (or, a path for communication through the SCell of the terminal between an RLC entity of a source DU and an MAC entity of another source DU from among a plurality of source DUs). For example, in the embodiment of FIG. 4A, when the cell 431 is migrated from a source DU (i.e., the DU 420a) from another DU (a target DU), the SCell path between the RLC entity and MAC entity of the UE 442, for which the cell 431 serves as an SCell, may correspond to the SCell path (i.e., the dashed path) between the RLC entity 421a and the MAC entity 422a of the DU 420a. For example, in the embodiment of FIG. 4B, when a cell 441 is migrated from source DUs (i.e., DUs 421b and 422b) from another DU (a target DU), the SCell data path between the MAC entity and the RLC entity of the UE 442, for which the cell 441 servers as an SCell, may correspond to the SCell path (i.e., the dashed path) between the RLC entity 421b_1 of the second source DU 421b and the MAC entity 422b_1 of the first DU 422b.

In operation 608, the network apparatus may switch the SCell data path (e.g., "RLC-MAC SCell path") between the RLC entity of the first DU and the MAC entity of the first DU (or another source DU) of the selected terminal. For example, the network apparatus may switch the path for communication through the SCell between the RLC entity of the first DU and the MAC entity of the first DU to be connected between the RLC entity of the first DU and the MAC entity of the second DU. Accordingly, an MAC endpoint of the SCell path between the RLC entity and the MAC entity of the selected terminal may be switched from the first DU to the second DU.

In an embodiment of the present disclosure, the network apparatus may identify whether there is a terminal to be migrated to the second DU from among terminals of the first cell connected to the MAC entity of the first DU (609). In an embodiment of the present disclosure, the network apparatus may identify whether the terminal selected in operation 606 is the last terminal, based on the determined migration order. Based the terminal selected in operation 606 being not the last terminal, the network apparatus may identify that there is a terminal to be migrated to the second DU, among the terminals of the first cell connected to the MAC entity of the first DU, and may perform operation 606 again to select a next terminal from among the terminals attached to the first cell. Based on the determined migration order, operations 606 to 608 may be iterated. Based on the determined migration order, in operation 609, the network apparatus may identify whether the iteration of terminals has ended. For example, the network apparatus may identify whether the iteration of terminal has ended, based on the terminal selected in operation 606 being the last terminal.

In an embodiment of the present disclosure, identifiers may be allocated to the terminals. The network apparatus may allocate a unique identifier to each terminal for selection or may use allocated identifiers of the terminals as identifiers for selection. Based on the identifiers of the terminals, the network apparatus may identify whether there are UEs that have not been selected. Based on there being UEs that have not been selected, the network apparatus may identify that there is a terminal to be migrated to the second DU, among the terminals of the first cell connected to the MAC entity of the first DU, and may perform operation 606 again to select any one of the one or more terminals that have not been selected. Based on the absence of any UEs that have not been selected, the network apparatus may identify that there is no terminal to be migrated to the second DU, among the terminals of the first cell connected to the MAC entity of the first DU, and may perform operation 610.

In an embodiment of the present disclosure, the network apparatus may identify whether there is a terminal, from among the terminals of the first cell, that does have a path connected between an RLC entity of an activated DU in the DU pool (e.g., the RLC entity of the first DU or RLC entity of another activated DU) and the MAC entity of the second DU. Based on the existence of a terminal, among the terminals of the first cell connected to the MAC entity of the first DU, that does not have a path connected between the MAC entity of the second DU and the RLC entity of any activated DU within the DU pool, or based on at least one terminal attached to the first cell being unable to communicate with the CU via the first cell through at least one path between the MAC entity of the second DU and the RLC entity of any one of the DUs capable of communicating with the CU, the network apparatus may identify that there is a terminal to be migrated to the second DU, from among the terminals of the first cell, and may perform operations 605 to 609 again. Based on the absence of a terminal, from among the terminals of the first cell, that does not have a path connected between the MAC entity of the second DU and the RLC entity of any activated DU in the DU pool, or based on all terminals attached to the first cell being capable of communicating with the CU via the first cell through at least one path between the MAC entity of the second DU and the RLC entity of any one of the DUs capable of communicating with the CU, the network apparatus may identify that there is no terminal to be migrated to the second DU from among the terminals of the first cell connected to the MAC entity of the first DU and perform operation 610.

Through operations 605 to 608, for all terminal attached to the first cell, it may be identified whether the PCell of each terminal is configured as the first cell, and based the identification, any one of the PCell path and the SCell path may be switched. Then, in an embodiment of the present disclosure, the network apparatus may resume the MAC scheduling for the first cell (610). For example, based on the absence of a terminal, from among the terminals of the first cell, that has a path connected between the MAC entity of the second DU and the RLC entity of any activated DU in the DU pool, the network apparatus may resume the MAC scheduling for the first cell of the second DU. For example, based on all terminals attached to the first cell being capable of communicating with the DU via the first cell through at least one data path connected between the MAC entity of the second DU and the RLC entity of any activated DU in the DU pool, the network apparatus may control the MAC scheduler of the second DU to resume the MAC scheduling for the first cell of the second DU. When identifiers for selection are allocated to the UEs, the network apparatus may reset or erase the memory about the selected identifiers.

According to operations 602 to 610, the paths for PCell of the UEs whose target cells are configured as a PCell between the MAC entity of a source DU and the RLC entity of the source DU (or any DU from among source DUs) may be switched to a path between the MAC entity of a target DU and the RLC entity of the source DU. For example, the paths for PCell of the UEs whose target cells are configured as a PCell may be switched from a "source DU RLC-source DU MAC" path to a "source DU RLC-target DU MAC" path. According to operations 602 to 610, the paths for SCell of UEs whose target cells are configured as an SCell between the RLC entity of the source DU and the MAC entity of the source DU may be switched to a path between the RLC entity of the source DU and the MAC entity of the target DU. For example, the paths for SCell of the UEs whose target cells are configured as an SCell may be switched from a "source DU RLC-source DU MAC" path to a "source DU RLC-target DU MAC" path.

In an embodiment of the present disclosure, the network apparatus may establish the RLC context of the first DU for the second DU (611). The RLC context may include cell configuration information included in the RLC entity. The network apparatus may migrate the RLC context included in the RLC entity of the first DU (or at least one of a plurality of source DUs) to the RLC entity of the second DU.

In an embodiment of the present disclosure, the network apparatus may select a terminal to be migrated to the second DU from among the terminals of the first cell connected to the RLC entity of the first DU (612). For example, the network apparatus may select a single terminal to be migrated to the RLC entity of the second DU from among terminals attached to the first cell and connected to the RLC entity of the first DU. For example, the network apparatus may perform operation 612 in a similar manner as in operation 606. In an embodiment of the present disclosure, the order for migration of terminals attached to the first cell may be predetermined, and the migration order for the terminals for performing operation 606 may be identical to or different from the migration order for the terminals for performing operation 612. In an embodiment of the present disclosure, unique identifiers of the terminals may be used for selection of terminals, and the identifiers of the terminals used in operation 606 may be identical to or different from the identifiers of the terminals used in operation 612.

In an embodiment of the present disclosure, the network apparatus may identify whether the first cell is configured as a PCell or an SCell for the terminal selected in operation 612 (613). In a similar manner as in operation 606, the network apparatus may obtain from the MAC scheduler information indicating whether the first cell is a PCell or an SCell of the selected terminal and identify, based on the obtained information, whether the PCell of the selected terminal is the first cell. Based on the first cell being configured as a PCell for the selected terminal, the network apparatus may perform operations 614 to 616. Based on the first cell being configured as a PCell for the selected terminal, the network apparatus may no longer switch (or change) a path for the selected terminal and perform operation 617.

In an embodiment of the present disclosure, based on the first cell being configured as a PCell for the terminal selected in operation 613, the network apparatus may perform operations 614 to 616. The network apparatus may establish the RLC UE context for the selected terminal on the second DU (614). For example, the network apparatus may migrate context information of the selected terminal that is associated with the RLC entity of the first DU to the RLC entity of the second DU.

In an embodiment of the present disclosure, based on the first cell being configured as a PCell of the terminal selected in operation 613, the network apparatus may switch the midhaul path of the second DU (615). For example, the network apparatus may switch the midhaul path between the first DU and the CU to be connected between the second DU and the CU for the selected terminal. Accordingly, the path between the CU and the RLC entity of the first DU may be switched to a path between the CU and the RLC entity of the second DU.

In an embodiment of the present disclosure, based on the first cell being configured as a PCell of the terminal selected in operation 613, the network apparatus may switch the PCell path and the SCell path between the RLC entity and the MAC entity for the selected terminal (616). For example, the network apparatus may switch the PCell data path connected between the RLC entity of the first DU and the MAC entity of the second DU, which has been switched in operation 607, to be connected between the RLC entity of the second DU and the MAC entity of the second DU. The network apparatus may switch the SCell data path of the selected terminal, which is connected between the RLC entity of the first DU and the MAC entity of the first DU (or another source DU) to be connected between the RLC entity of the second DU and the MAC entity of the first DU.

In an embodiment of the present disclosure, the network apparatus may identify whether there is a terminal to be migrated to the second DU from among the terminals of the first cell connected to the RLC entity of the first DU (617). For example, the network apparatus may identify the terminal selected in operation 612 is the las terminal according to the determined migration order. For example, based on the identifiers of the terminal, the network apparatus may identify whether there is a terminal that has not been selected. The network apparatus may identify whether there is a terminal connected to the RLC entity of the first DU, from among the terminals of which first cell is configured as a PCell. The network apparatus may identify whether there is a terminal whose midhaul path is connected between the CU and the RLC entity of the first DU, from among the terminals for which the first cell is configured as a PCell.

From among the terminals of the first cell connected to the RLC entity of the first DU, based on the existence of a terminal to be migrated to the second DU, the network apparatus may perform operations 612 to 617 again. For example, based on the terminal selected in operation 612 not being the last terminal of the determined migration order or based on the existence of a terminal that has not been selected, the network apparatus may identify that there is a terminal connected to the RLC entity of the first DU and perform operations 612 to 617 again. For example, based on the terminal selected in operation 612 being the last terminal of the determined migration order or based on the absence of a terminal that has not been selected, the network apparatus may identify that no terminal to be migrated to the second DU from among the terminals connected to the RLC entity of the first DU exists (or is left) and terminate the method 600.

According to operations 611 to 617, the paths for the PCell of the UEs whose target cell is configured as a PCell between the MAC entity of the target DU and the RLC entity of the source DU may be switched to paths between the MAC entity of the target DU and the RLC entity of the target DU. For example, the paths for PCell of the UEs whose target cells are configured as a PCell may be switched from a "source DU RLC-target DU MAC" path to a "target DU RLC-target DU MAC" path. According to operations 611 to 617, the paths for the SCell of the UEs whose target cell is configured as an SCell between the MAC entity of the source DU and the RLC entity of the source DU may be switched to paths between the MAC entity of the source DU and the RLC entity of the target DU. For example, the paths for SCell of the UEs whose target cells are configured as a PCell may be switched from a "source DU RLC-source DU MAC" path to a "target DU RLC-source DU MAC" path.

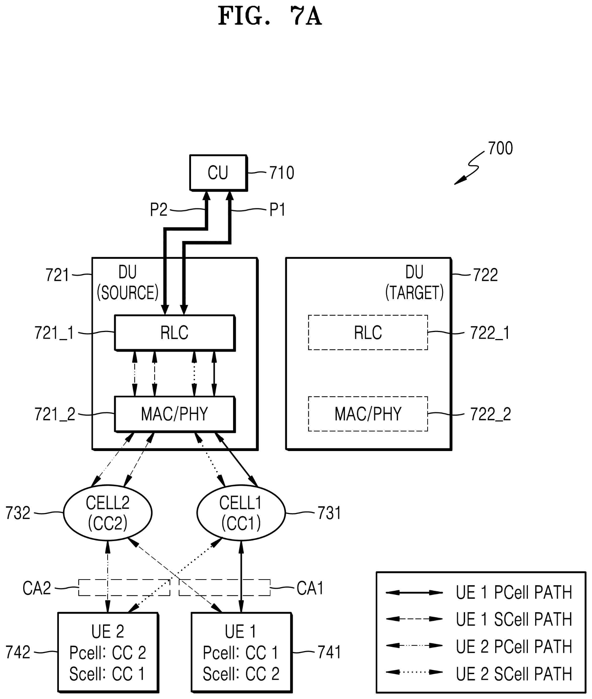

FIGS. 7A to 7C are each a diagram illustrating an example of a data flow in a user plane due to scaling-out of a first DU to a second DU by a network apparatus according to an embodiment of the present disclosure. FIGS. 7A to 7C illustrate the chronological changes in data flow resulting from the migration of a cell 731 from a DU 721 to a DU 722 in a RAN system 700 implemented based on the intra-DU CA scenario shown in FIG. 4A. In the embodiments of FIGS. 7A to 7C, the DU 721 may be understood as a source DU or a first DU, the DU 722 may be understood as a target DU or a second DU, and the cell 731 may be understood as a target cell or a first cell. In the embodiment illustrated in FIG. 7A, the RAN system 700 may support the carrier aggregation of the cell 731 and a cell 732 in a similar manner as in the RAN system 400a of FIG. 4A. For convenience of illustration, only two cells (731 and 732) are shown in FIG. 7A. However, the number of carrier-aggregated cells is not limited thereto.

A network apparatus configured to manage and maintain the RAN system 700 (e.g., an OAM module) may determine whether to migrate the cell 731 from the DU 721 to the DU 722. For example, the network apparatus may determine to perform a scale-out for the DU 721 to the DU 722, which previously did not exist or was in an inactive state. The determination to perform a scale-out may include determining to migrate the cell 731 associated with the DU 721 to the DU 722. Based on the determination to perform a scale-out, the network apparatus may determine a scaling status of scale-out and notify the network apparatus of the RAN system 700 (e.g., a scale agent) configured to manage scaling of DUs of the determined scaling status and the scale-out request. The network apparatus configured to manage and maintain the RAN system may initiate the DU 722.

The network apparatus configured to manage the scaling of the DUs of the RAN system 700 may identify the scaling status as a scale-out. Based on the identification of the scaling status as a scale-out, the network apparatus may migrate a cell context of the cell 731 included in the DU 721 from the DU 721 to the DU 722. For example, the network apparatus may migrate the cell context of the cell 731 from the DU 721 to the DU 722 in a similar manner as in operation 601. Through the migration of the cell context, configuration of the cell 731 or cell configuration information of the cell 731 may be configured on the DU 722. FIG. 7A illustrates a data flow of the RAN system 700 after the network apparatus of the RAN system 700 performs operation 601 of the method 600 of FIG. 6.

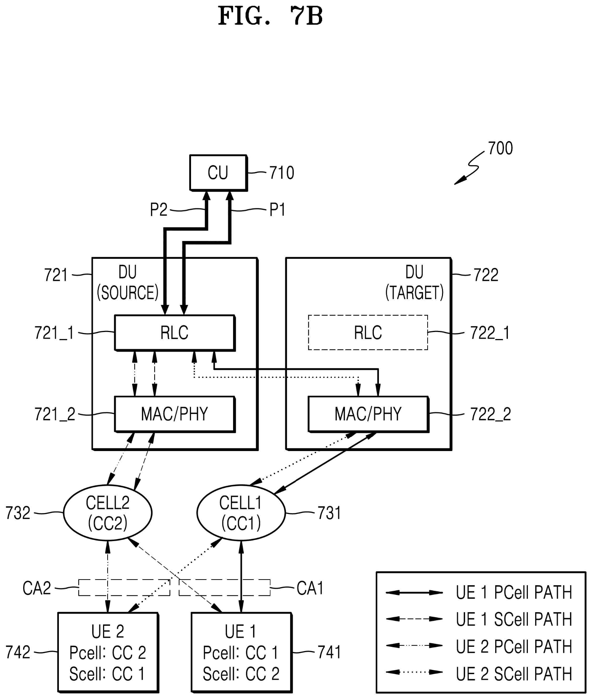

The network apparatus may migrate the MAC context of the cell 731 associated with an MAC/PHY entity 721_2 of the DU 721 to an MAC/PHY entity 722_2 of the DU 722 in a similar manner as in operation 602. The network apparatus may suspend the MAC scheduling for the cell 731 of the DU 721 in a similar manner as in operation 603. The network apparatus may switch the fronthaul path for the cell 731 in a similar manner as in operation 604. For example, the network apparatus may switch the fronthaul path connected between the RU connected to the cell 731 and the MAC/PHY entity 721_2 of the DU 721 to a path between the RU connected to the cell 731 and the MAC/PHY entity 722_2 of the DU 722_2. Accordingly, the "UE 1 PCell path" between the cell 731 and the MAC/PHY entity 721_2 in FIG. 7A may be switched to the "UE 1 PCell path" between the cell 731 and the MAC/PHY entity 722_2 in FIG. 7B. In a similar manner, the "UE 2 SCell path" between the cell 731 and the MAC/PHY entity 721_2 in FIG. 7A may be switched to the "UE 2 SCell path" between the cell 731 and the MAC/PHY entity 722_2 in FIG. 7B.

The network apparatus may select any one UE between UEs (741 and 742) attached to the cell 731 in a similar manner as in operation 605. For example, the network apparatus may select the UE 741 arbitrarily or based on a predetermined migration order. The network apparatus may identify whether the cell 731 is configured as a PCell or an SCell for the UE 741 in a similar manner as in operation 606. Based on the PCell of the UE 741 being configured as the cell 731 corresponding to the component carrier "CC1", the network apparatus may switch the path for the PCell between the MAC entity and the RLC entity of the UE 741 in a similar manner as in operation 607. In the embodiment of FIG. 7A, the path for the PCell between the MAC entity and the RLC entity of the UE 741 may be the "UE 1 PCell path" between the MAC/PHY entity 721_2 and the RLC entity 721_1. The network apparatus may switch the "UE 1 PCell path" between the MAC/PHY entity 721_2 and the RLC entity 721_1 to a path between the MAC/PHY entity 722_2 and the RLC entity 721_2. Accordingly, the "UE 1 PCell path" between the MAC/PHY entity 721_2 and the RLC entity 721_1 in FIG. 7A may be switched to the "UE 1 PCell path" between the MAC/PHY entity 722_2 of the DU 722 and the RLC entity 721_1 in FIG. 7B.

The network apparatus may identify whether there is a UE to be migrated to the DU 722 from among the UEs (741 and 742) of the cell 731. For example, the network apparatus may identify whether there is a UE to be migrated to the DU 722 from among the UEs (741 and 742) of the cell 731 in similar manner as in operation 609. The network apparatus may identify that the UE 742 should be migrated to the DU 722 and may re-select the UE 742 in a similar manner as in operation 605 to migrate the UE 742 to the DU 722 of the cell 731.

The network apparatus may identify whether the cell 731 is configured as a PCell or an SCell for the selected UE 742 in a similar manner as in operation 606. Based on the SCell of the UE 742 being configured as the cell 731 corresponding to the component carrier "CC1", the network apparatus may switch the path for the SCell between the MAC entity and the RLC entity of the UE 742 in a similar manner as in operation 608. In the embodiment of FIG. 7A, the path for the SCell between the MAC entity and the RLC entity of the UE 742 may be the "UE 2 SCell path" between the MAC/PHY entity 721_2 and the RLC entity 721_1. The network apparatus may switch the "UE 2 SCell path" between the MAC/PHY entity 721_2 and the RLC entity 721_1 to the path between the MAC/PHY entity 722_2 and the RLC entity 721_2. Accordingly, the "UE 2 SCell path" between the MAC/PHY entity 721_2 and the RLC entity 721_1 in FIG. 7A may be switched to the "UE 2 SCell path" between the MAC/PHY entity 722_2 of the DU 722 and the RLC entity 722_1 in FIG. 7B.

The network apparatus may identify whether there is a UE to be migrated to the DU 722 from among the UEs (741 and 742) of the cell 731 in similar manner as in operation 609. For example, based on the method described in relation to operation 609, the network apparatus may identify whether there is a UE to be migrated to the DU 722 from among the UEs (741 and 742) of the cell 731.

In the embodiment of FIG. 7B, all UEs (741 and 742) of the cell 731 may be selected once, and whether the cell 731 is configured as a PCell for a selected UE may be identified. Or, as the path between the MAC entity and the RLC entity of each of the UEs (741 and 742) of the cell 731 is switched, all UEs (741 and 742) of the cell 731 may have a path connected between the MAC/PHY entity 722_2 of the DU 722 and the RLC entity 721_1 of the DU 721. Alternatively, all UEs (741 and 742) of the cell 731 may communicate with the CU via the cell 731 through the path between the MAC/PHY entity 722_2 of the DU 722 and the RLC entity of any DU in the DU pool (in the embodiment of FIG. 7B, the RLC entity 722_1 of the DU 721). Accordingly, the network apparatus may identify that there is no UE to be migrated to the DU 722 from among the UEs (741 and 742) of the cell 731. Based on the identification that there is no UE to be migrated to the DU 722, the network apparatus may resume the MAC scheduling for the cell 731 in a similar manner as in operation 610. For example, the network apparatus may control (or instruct) the MAC/PHY entity 722_2 of the DU 722 to start the MAC scheduling for the cell 731.

FIG. 7B illustrates a data flow of the RAN system 700 after the network apparatus of the RAN system 700 of FIG. 7A performs operations 602 to 610 of the method 600 of FIG. 6. In comparison between FIG. 7A and FIG. 7B, the "UE 1 PCell path" between the RLC entity 721_1 of the DU 721 and the MAC entity 721_2 of the DU 721 in FIG. 7A may be switched to the "UE 1 PCell path" between the RLC entity 721_1 of the DU 721 and the MAC entity 722_2 of the DU 722 in FIG. 7B. The "UE 2 SCell path" between the RLC entity 721_1 of the DU 721 and the MAC entity 721_2 of the DU 721 in FIG. 7A may be switched to the "UE 2 SCell path" between the MAC entity 722_2 of the DU 722 and the RLC entity 721_1 of the DU 721 in FIG. 7B.

The network apparatus may establish the RLC context of the DU 721 on the DU 722 in a similar manner as in operation 611. The network apparatus may select a UE to be migrated to the DU 722 from among the UEs (741 and 742) of the cell 731 connected to the RLC entity 721_1 of the DU 721 in a similar manner as in operation 612. For example, the network apparatus may select the UE 741 as a UE to be migrated. The network apparatus may identify whether the cell 731 is configured as a PCell or an SCell for the UE 741 in a similar manner as in operation 613. Based on the PCell of the UE 741 being configured as the cell 731 corresponding to the component carrier "CC1," the network apparatus may establish the RLC UE context for the UE 741 on the RLC entity 722_2 of the DU 722 in a similar manner as in operation 614. The network apparatus may switch the midhaul path P1 for the UE 741 between the DU 721 and the CU 710 to a path between the RLC entity 722_1 of the DU 722 and the CU 710 in a similar manner as in operation 615.

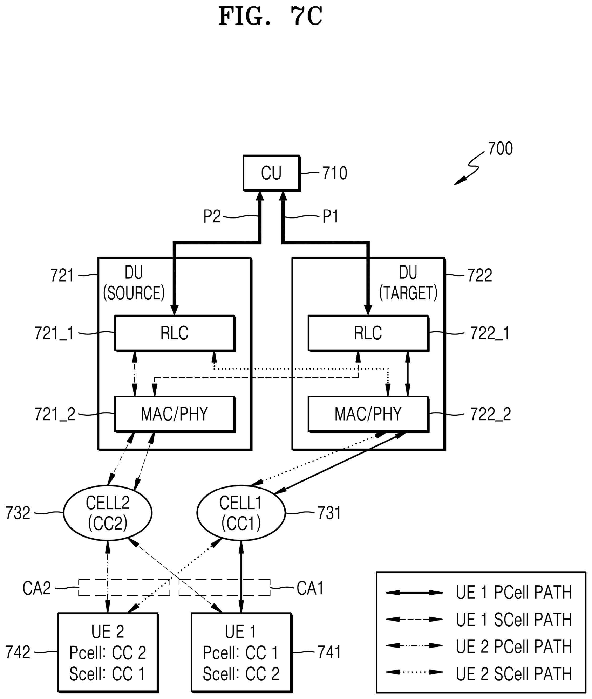

The network apparatus may switch the path for the SCell and the path for the PCell between the MAC entity and the RLC entity of the UE 741 in a similar manner as in operation 616. For example, the network apparatus may switch the "UE 1 PCell path" between the MAC/PHY entity 722_2 of the DU 722 and the RLC entity 721_1 of the DU 721 illustrated in FIG. 7B to be between the MAC/PHY entity 722_2 of the DU 722 and the RLC entity 722_1 of the DU 722. The network apparatus may switch the "UE 1 SCell path" between the MAC/PHY entity 721_2 of the DU 721 and the RLC entity 721_1 of the DU 721 illustrated in FIG. 7B to be between the MAC/PHY entity 721_2 of the DU 721 and the RLC entity 722_1 of the DU 722. Accordingly, the "UE 1 PCell path" between the MAC/PHY entity 722_2 and the RLC entity 721_1 in FIG. 7B may be switched to the "UE 1 PCell path" between the MAC/PHY entity 722_2 and the RLC entity 722_1 of the DU 722 in FIG. 7C. The "UE 1 SCell path" between the MAC/PHY entity 721_2 and the RLC entity 721_1 in FIG. 7B may be switched to the "UE 1 SCell path" between the MAC/PHY entity 721_2 of the DU 721 and the RLC entity 722_1 of the DU 722 in FIG. 7C.

The network apparatus may identify whether there is a UE to be migrated to the RLC entity 722_1 of the DU 722 from among the UEs (741 and 742) of the cell 731 in similar manner as in operation 617. The network apparatus may identify that, from among the UEs (741 and 742) of the cell 731, the UE 742 should be migrated to the RLC entity 722_1 of the DU 722 and select the UE 742 as a UE to be migrated to the DU 722 of the cell 731 in a similar manner as in operation 612.

The network apparatus may identify whether the cell 731 is configured as a PCell or an SCell for the selected UE 742 in a similar manner as in operation 613. Based on the SCell of the UE 742 being configured as the cell 731 corresponding to the component carrier "CC1," the network apparatus may identify whether a UE to be migrated to the RLC entity 722_1 of the DU 722 exists (or is left) from among the UEs (741 and 742) of the cell 731 in a similar manner as in operation 617 without switching of the path for the UE 742. Based on all UEs (741 and 742) of the cell 731 having been selected once, the network apparatus may identify that there is no UE to be migrated to the RLC entity 722_1 of the DU 722 and may terminate the scaling.

FIG. 7C illustrates a data flow of the RAN system 700 after the network apparatus of the RAN system 700 of FIG. 7B performs operations 611 to 617 of the method 600 of FIG. 6. In comparison between FIG. 7B and FIG. 7C, the "UE 1 PCell path" between the RLC entity 721_1 of the DU 721 and the MAC entity 722_2 of the DU 722 in FIG. 7B may be switched to the "UE 1 PCell path" between the RLC entity 722_1 of the DU 722 and the MAC entity 722_2 of the DU 722 in FIG. 7C. The "UE 1 SCell path" between the RLC entity 721_1 of the DU 721 and the MAC entity 721_2 of the DU 721 in FIG. 7B may be switched to the "UE 1 SCell path" between the MAC entity 721_2 of the DU 721 and the RLC entity 722_1 of the DU 722 in FIG. 7C.

In comparison between FIG. 7A and FIG. 7C, the cell 731 and the cell 732 of FIG. 7A may be processed by a single DU 721 while the cell 731 and the cell 732 of FIG. 7C may be processed together by a plurality of DUs (721 and 722) through scaling-out. Accordingly, in an embodiment of the present disclosure, the RAN system 700 of FIG. 7A, which follows the intra-DU CA scenario, may be modified to follow the inter-DU CA scenario as shown in FIG. 7C, after the scale-out to add the second DU.

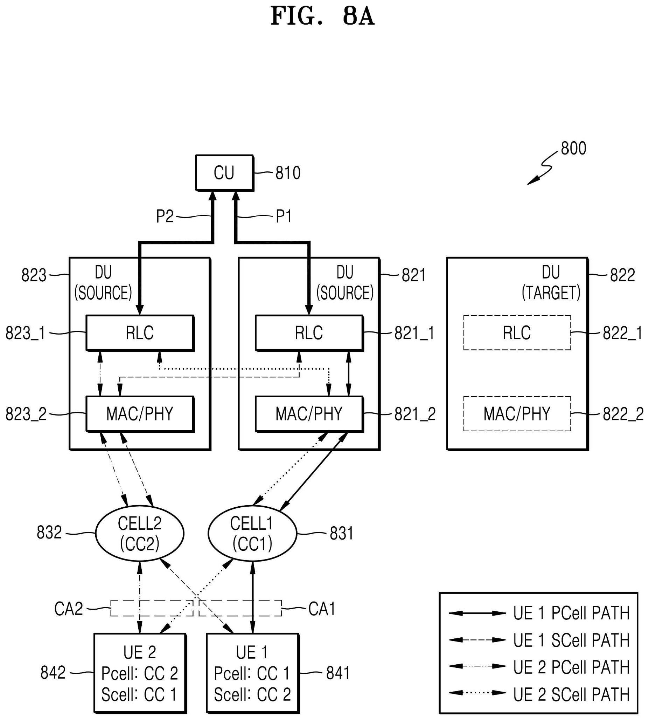

FIGS. 8A to 8C are each a diagram illustrating an example of a data flow in a user plane due to scaling-out of a first DU to a second DU by a network apparatus according to an embodiment of the present disclosure. FIGS. 8A to 8C illustrate the chronological changes in data flow resulting from the migration of a cell 831 from a DU 821 to a DU 822 in a RAN system 800 implemented based on the inter-DU CA scenario shown in FIG. 4B. In the embodiments of FIGS. 8A to 8C, the DU 821 may be understood as a source DU, a first source DU, or a first DU, the DU 822 may be understood as a target DU or a second DU, a DU 823 may be understood as another DU, a second source DU, or a third DU, and the cell 831 may be understood as a first cell. In the embodiment illustrated in FIG. 8A, the RAN system 800 may support the carrier aggregation of the cell 831 and a cell 832 in a similar manner as in the RAN system 400b of FIG. 4B. For convenience of illustration, only two cells (731 and 732) and two source DUs (821 and 823) are shown in FIG. 8A. However, the numbers of carrier-aggregated cells and source DUs are not limited thereto.

A network apparatus configured to manage and maintain the RAN system 800 (e.g., an OAM module) may determine whether to migrate the cell 831 from the DU 821 to the DU 822. For example, the network apparatus may determine to perform a scale-out for the DU 821 to the DU 822, which previously did not exist or was in an inactive state. The determination to perform a scale-out may include determining to migrate the cell 831 associated with the DU 821 to the DU 822. Based on the determination to perform a scale-out, the network apparatus may determine a scaling status of scale-out and notify the network apparatus of the RAN system 800 (e.g., a scale agent) configured to manage scaling of DUs of the determined scaling status and the scale-out request. The network apparatus configured to manage and maintain the RAN system may initiate the DU 822.

The network apparatus configured to manage the scaling of the DUs of the RAN system 800 may identify the scaling status as a scale-out. Based on the identification of the scaling status as a scale-out, the network apparatus may migrate the cell context of the cell 831 included in at least one of the DU 821 or the DU 823 from at least one of the DU 821 or the DU 823 to the DU 822. For example, the network apparatus may migrate in a similar manner as in operation 601, the cell context of the cell 831 included in the DU 821 from the DU 821 to the DU 822, and/or the cell context of the cell 831 included in the DU 821 from the DU 821 to the DU 822. Through the migration of the cell context, configuration of the cell 831 or cell configuration information of the cell 831 may be configured on the DU 822. FIG. 8A illustrates a data flow of the RAN system 800 after the network apparatus of the RAN system 800 performs operation 601 of the method 600 of FIG. 6.

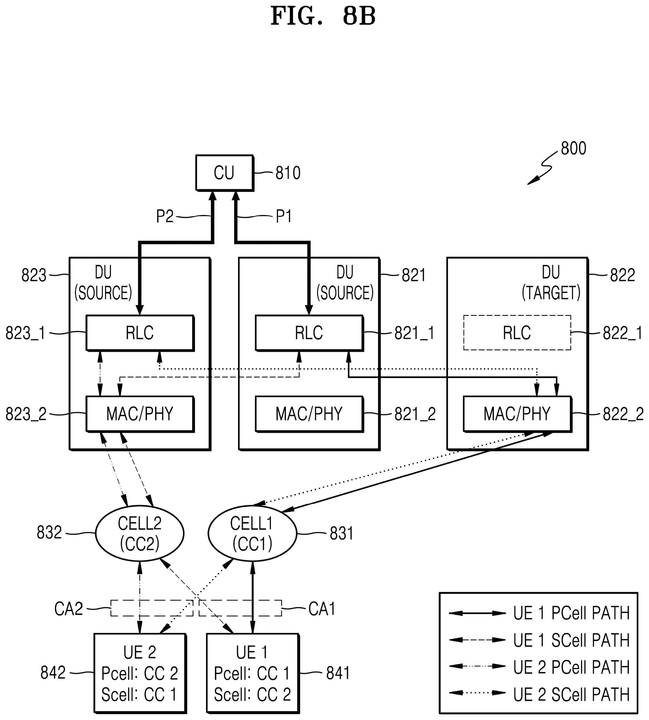

The network apparatus may migrate at least one of the MAC context of the cell 831 associated with an MAC/PHY entity 821_2 of the DU 821 or the MAC context of the cell 831 associated with an MAC/PHY entity 831_2 of the DU 821 to an MAC/PHY entity 822_2 of the DU 822 in a similar manner as in operation 602. The network apparatus may suspend the MAC scheduling for the cell 831 of the DU 821 in a similar manner as in operation 603. The network apparatus may switch the fronthaul path for the cell 831 in a similar manner as in operation 604. For example, the network apparatus may switch the fronthaul path connected between the RU connected to the cell 831 and the MAC/PHY entity 821_2 of the DU 821 to a path between the RU connected to the cell 831 and the MAC/PHY entity 822_2 of the DU 822. Accordingly, the "UE 1 PCell path" between the cell 831 and the MAC/PHY entity 821_2 in FIG. 8A may be switched to the "UE 1 PCell path" between the cell 831 and the MAC/PHY entity 822_2 in FIG. 8B. In a similar manner, the "UE 2 SCell path" between the cell 831 and the MAC/PHY entity 821_2 in FIG. 8A may be switched to the "UE 2 SCell path" between the cell 831 and the MAC/PHY entity 822_2 in FIG. 8B.

The network apparatus may select any one UE between UEs (841 and 842) attached to the cell 831 in a similar manner as in operation 605. For example, the network apparatus may select the UE 841 arbitrarily or based on a predetermined migration order. The network apparatus may identify whether the cell 831 is configured as a PCell or an SCell for the UE 841 in a similar manner as in operation 606. Based on the PCell of the UE 841 being configured as the cell 831 corresponding to the component carrier "CC1", the network apparatus may switch the path for the PCell between the MAC entity and the RLC entity of the UE 841 in a similar manner as in operation 607. In the embodiment of FIG. 8A, the path for the PCell between the MAC entity and the RLC entity of the UE 841 may be the "UE 1 PCell path" between the MAC/PHY entity 821_2 of the DU 821 and the RLC entity 821_1 of the DU 823. The network apparatus may switch the "UE 1 PCell path" between the MAC/PHY entity 821_2 and the RLC entity 821_1 to a path between the MAC/PHY entity 822_2 and the RLC entity 821_1. Accordingly, the "UE 1 PCell path" between the MAC/PHY entity 821_2 and the RLC entity 821_1 in FIG. 8A may be switched to the "UE 1 PCell path" between the MAC/PHY entity 822_2 of the DU 822 and the RLC entity 821_1 in FIG. 8B.

The network apparatus may identify whether there is a UE to be migrated to the DU 822 from among the UEs (841 and 842) of the cell 831. For example, the network apparatus may identify whether there is a UE to be migrated to the DU 822 from among the UEs (841 and 842) of the cell 831 in similar manner as in operation 609. The network apparatus may identify that the UE 842 should be migrated to the DU 822 and may re-select the UE 842 in a similar manner as in operation 605 to migrate the UE 842 to the DU 822 of the cell 831.

The network apparatus may identify whether the cell 831 is configured as a PCell or an SCell for the selected UE 842 in a similar manner as in operation 606. Based on the SCell of the UE 842 being configured as the cell 831 corresponding to the component carrier "CC1", the network apparatus may switch the path for the SCell between the MAC entity and the RLC entity of the UE 842 in a similar manner as in operation 608. In the embodiment of FIG. 8A, the path for the SCell between the MAC entity and the RLC entity of the UE 842 may be the "UE 2 SCell path" between the MAC/PHY entity 821_2 of the DU 821 and the RLC entity 823_1 of the DU 823. The network apparatus may switch the "UE 2 SCell path" between the MAC/PHY entity 821_2 and the RLC entity 823_1 to a path between the MAC/PHY entity 822_2 and the RLC entity 823_2. Accordingly, the "UE 2 SCell path" between the MAC/PHY entity 821_2 and the RLC entity 823_1 of the DU 821 in FIG. 8A may be switched to the "UE 2 SCell path" between the MAC/PHY entity 821_2 of the DU 821 and the RLC entity 823_1 of the DU 823 in FIG. 8B.

The network apparatus may identify whether there is a UE to be migrated to the DU 822 from among the UEs (841 and 842) of the cell 831 in similar manner as in operation 609. For example, based on the method described in relation to operation 609, the network apparatus may identify whether there is a UE to be migrated to the DU 822 from among the UEs (841 and 842) of the cell 831. Based on the identification that there is no UE to be migrated to the DU 822, the network apparatus may resume the MAC scheduling for the cell 831 in a similar manner as in operation 610. For example, the network apparatus may control (or instruct) the MAC/PHY entity 822_2 of the DU 822 to start the MAC scheduling for the cell 831.

FIG. 8B illustrates a data flow of the RAN system 800 after the network apparatus of the RAN system 800 of FIG. 8A performs operations 602 to 610 of the method 600 of FIG. 6. In comparison between FIG. 8A and FIG. 8B, the "UE 1 PCell path" between the RLC entity 821_1 of the DU 821 and the MAC/PHY entity 821_2 of the DU 821 in FIG. 8A may be switched to the "UE 1 PCell path" between the RLC entity 821_1 of the DU 821 and the MAC entity 822_2 of the DU 822 in FIG. 8B. The "UE 2 SCell path" between the RLC entity 823_1 of the DU 823 and the MAC/PHY entity 821_2 of the DU 821 in FIG. 8A may be switched to the "UE 2 SCell path" between the MAC entity 822_2 of the DU 822 and the RLC entity 821_3 of the DU 823 in FIG. 8B.

The network apparatus may establish the RLC context included the RLC entity of at least one of the DU 821 or the DU 832 for the DU 822 in a similar manner as in operation 611. The network apparatus may select a UE to be migrated to the DU 822 from among the UEs (841 and 842) of the cell 831 connected to the RLC entity 821_1 of the DU 821 in a similar manner as in operation 612. For example, the network apparatus may select the UE 841 as a UE to be migrated. The network apparatus may identify whether the cell 831 is configured as a PCell or an SCell for the UE 841 in a similar manner as in operation 613. Based on the PCell of the UE 841 being configured as the cell 831 corresponding to the component carrier "CC1," the network apparatus may establish the RLC UE context for the UE 841 on the RLC entity 822_2 of the DU 822 in a similar manner as in operation 614. The network apparatus may switch the midhaul path P1 for the UE 841 between the DU 821 and the CU 810 to a path between the RLC entity 822_1 of the DU 822 and the CU 810 in a similar manner as in operation 615.

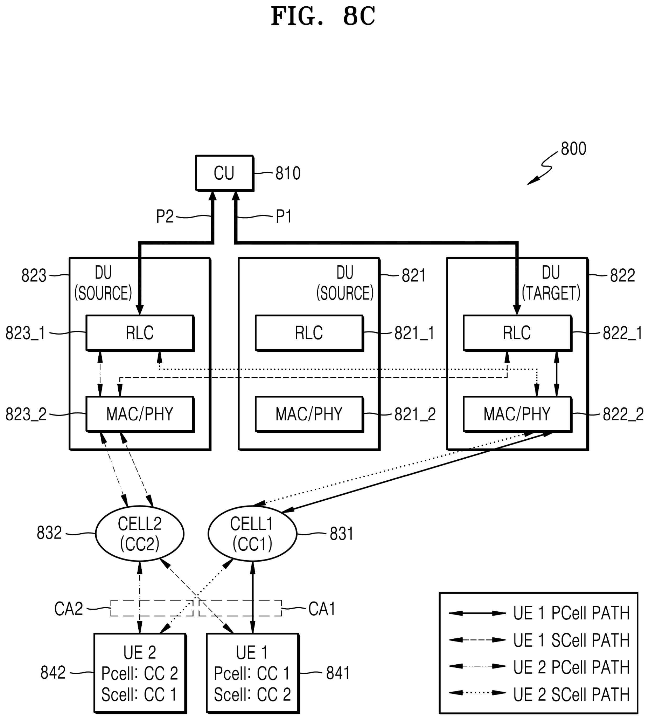

The network apparatus may switch the path for the SCell and the path for the PCell between the MAC entity and the RLC entity of the UE 841 in a similar manner as in operation 616. For example, the network apparatus may switch the "UE 1 PCell path" between the MAC/PHY entity 822_2 of the DU 822 and the RLC entity 821_1 of the DU 821 illustrated in FIG. 8B to be between the MAC/PHY entity 822_2 of the DU 822 and the RLC entity 822_1 of the DU 822. The network apparatus may switch the "UE 1 SCell path" between the MAC/PHY entity 823_2 of the DU 823 and the RLC entity 821_1 of the DU 821 illustrated in FIG. 8B to be between the MAC/PHY entity 823_2 of the DU 823 and the RLC entity 822_1 of the DU 822. Accordingly, the "UE 1 PCell path" between the MAC/PHY entity 822_2 and the RLC entity 821_1 in FIG. 8B may be switched to the "UE 1 PCell path" between the MAC/PHY entity 822_2 and the RLC entity 822_1 of the DU 822 in FIG. 8C. The "UE 1 SCell path" between the MAC/PHY entity 823_2 and the RLC entity 821_1 in FIG. 8B may be switched to the "UE 1 SCell path" between the MAC/PHY entity 823_2 of the DU 823 and the RLC entity 822_1 of the DU 822 in FIG. 8C.

The network apparatus may identify whether there is (or remains) a UE to be migrated to the RLC entity 822_1 of the DU 822 from among the UEs (841 and 842) of the cell 831 in similar manner as in operation 617. The network apparatus may identify that, from among the UEs (841 and 842) of the cell 831, the UE 842 should be migrated to the RLC entity 822_1 of the DU 822 and select the UE 842 as a UE to be migrated to the DU 822 of the cell 831 in a similar manner as in operation 612.

The network apparatus may identify whether the cell 831 is configured as a PCell or an SCell for the selected UE 842 in a similar manner as in operation 613. Based on the Scell of the UE 842 being configured as the cell 831 corresponding to the component carrier "CC1," the network apparatus may identify whether a UE to be migrated to the RLC entity 822_1 of the DU 822 exists (or is left) from among the UEs (841 and 842) of the cell 831 in a similar manner as in operation 617 without switching of the path for the UE 842. Based on all UEs (841 and 842) of the cell 831 having been selected once, the network apparatus may identify that there is no UE to be migrated to the RLC entity 822_1 of the DU 822 and may terminate the scaling.

FIG. 8C illustrates a data flow of the RAN system 800 after the network apparatus of the RAN system 800 of FIG. 8B performs operations 611 to 617 of the method 600 of FIG. 6. In comparison between FIG. 8B and FIG. 8C, the "UE 1 PCell path" between the RLC entity 821_1 of the DU 821 and the MAC entity 822_2 of the DU 822 in FIG. 8B may be switched to the "UE 1 PCell path" between the RLC entity 822_1 of the DU 822 and the MAC entity 822_2 of the DU 822 in FIG. 8C. The "UE 1 SCell path" between the RLC entity 821_1 of the DU 821 and the MAC entity 823_2 of the DU 823 in FIG. 8B may be switched to the "UE 1 SCell path" between the MAC entity 823_2 of the DU 823 and the RLC entity 822_1 of the DU 822 in FIG. 8C.

In comparison between FIG. 8A and FIG. 8C, the cell 831 and the cell 832 of FIG. 8A may be processed together by a plurality of DUs (821 and 823). However, the cell 831 and the cell 832 of FIG. 8A may be processed together by a plurality of DUs (822 and 823) through scaling-out. Accordingly, in an embodiment of the present disclosure, the RAN system 800 of FIG. 8A, which follows the inter-DU CA scenario, may still follow the inter-DU CA scenario as shown in FIG. 8C, even after the scale-out to add the second DU.

FIG. 9 is a flowchart of a method of scaling in a first DU to a second DU by a network apparatus according to an embodiment of the present disclosure. Referring to FIG. 9, the method 900 may include operations 901 to 916. The method 900 may be performed by the network apparatus of FIG. 2. For example, the network apparatus may perform the method 900 based on the identification of the scaling status as a scale-in. The method 900 may be a method for migrating the first cell from the first DU (which has previously been communicating with the first cell) to the second DU. The method 900 may be a method for migrating the first cell which has been processed by the first DU to the second DU to use the second DU instead of the first DU or to remove the first DU from the DU pool. In an embodiment of the present disclosure, operations 901 to 916 of the method 900 may be performed by at least one processor included in an electronic apparatus. The method 900 is not limited to the description of FIG. 9, and in one or more embodiments, the method 900 may further include operations that are not shown in FIG. 9, or some of the operations of FIG. 9 may be omitted from the method 900.

In an embodiment of the present disclosure, the second DU may be a DU which has previously been communicating with the first cell. Accordingly, the second DU may already include the cell context of the first cell. In this embodiment, unlike in the method 600 of FIG. 6, migration of the cell context of the first cell included in the first DU to the second DU may be omitted from the method 900.

In an embodiment of the present disclosure, the network apparatus may migrate the MAC context of the first cell associated with the MAC entity of the first DU to the MAC entity of the second DU (901). For example, the network apparatus may migrate or copy the MAC context for the first cell, included in at least one of the PHY entity and the MAC entity of the first DU (or at least one of a plurality of source DUs) to an entity corresponding to the second DU in a similar manner as in operation 602 of FIG. 6.

In an embodiment of the present disclosure, the network apparatus may cease the MAC scheduling for the first cell (902). For example, the network apparatus may at least partially suspend the MAC scheduling for the first DU in a similar manner as in operation 603 of FIG. 6.

In an embodiment of the present disclosure, the network apparatus may switch the fronthaul path for the first cell (903). For example, the network apparatus may switch (or change) the fronthaul path connected between the first DU and the RU including the first cell to be connected between the second DU and the RU in a similar manner as in operation 604 of FIG. 6. Accordingly, the path between the RU of the first cell and the PHY entity of the first DU may be switched to a path between the RU and the PHY entity of the second DU.

In an embodiment of the present disclosure, the network apparatus may select a terminal to be migrated to the second DU from among terminals of the first cell connected to the MAC entity of the first DU (904). For example, the network apparatus may arbitrarily select a single terminal to be migrated to the MAC entity of the second DU from among the terminals (e.g., UEs) attached to the first cell and connected to the MAC entity of the first DU, in a similar manner as in operation 605 of FIG. 6.

In an embodiment of the present disclosure, the network apparatus may identify whether the first cell is configured as a PCell or an SCell for the terminal selected in operation 904 (905). For example, the network apparatus may identify whether the PCell of the selected terminal is the first cell in a similar manner as in operation 606 of FIG. 6.

In an embodiment of the present disclosure, based on the first cell being configured as a PCell for the terminal selected in operation 904, the network apparatus may switch the path for the PCell between the RLC entity and the MAC entity of the selected terminal (906). For example, the network apparatus may switch the path for the PCell between the MAC entity and the RLC entity of the selected terminal (e.g., "RLC-MAC PCell path") to a path between the MAC entity of the second DU and the RLC entity in a similar manner as in operation 607 of FIG. 6.

In an embodiment of the present disclosure, based on the first cell being configured as a PCell for the terminal selected in operation 904, the network apparatus may switch the path for the SCell between the RLC entity and the MAC entity of the selected terminal (907). For example, the network apparatus may switch the SCell data path between the MAC entity of the first DU and the RLC entity of the first DU of the selected terminal (e.g., "RLC-MAC SCell path). For example, the network apparatus may switch the path for communication through the SCell between the RLC entity of the first DU and the MAC entity of the first DU to be connected between the RLC entity of the second DU and the MAC entity of the second DU. Accordingly, both the RLC endpoint and MAC endpoint of the SCell path between the MAC entity and the RLC entity of the selected terminal may be switched from the first DU to the second DU.

In an embodiment of the present disclosure, the network apparatus may identify whether there is a terminal to be migrated to the second DU from among terminals of the first cell connected to the MAC entity of the first DU (908). For example, the network apparatus may identify whether there is a terminal to be migrated, in a similar manner as in operation 609 of FIG. 6.

Through operations 904 to 908, for all terminal attached to the first cell, it may be identified whether the PCell of each terminal is configured as the first cell, and based the identification, any one of the PCell path and the SCell path may be switched. Then, in an embodiment of the present disclosure, the network apparatus may resume the MAC scheduling for the first cell (909). For example, the network apparatus may resume the MAC scheduling for the first cell in a similar manner as in operation 610.

According to operations 901 to 909, the paths for PCell of the UEs whose target cells are configured as a PCell between the MAC entity of a source DU and the RLC entity of the source DU (or any DU from among source DUs) may be switched to a path between the MAC entity of a target DU and the RLC entity of the source DU. For example, the paths for PCell of the UEs whose target cells are configured as a PCell may be switched from a "source DU RLC-source DU MAC" path to a "source DU RLC-target DU MAC" path. According to operations 901 to 909, the paths for the SCell of the UEs whose target cell is configured as an SCell between the MAC entity of the source DU and the RLC entity of the source DU may be switched to paths between the MAC entity of the target DU and the RLC entity of the target DU. For example, the paths for SCell of the UEs whose target cells are configured as an SCell may be switched from the "source DU RLC-source DU MAC" path to the "target DU RLC-target DU MAC" path.

In an embodiment of the present disclosure, the network apparatus may establish the RLC context of the first DU for the second DU (910). For example, the network apparatus may establish the RLC context of the first DU for the second DU in a similar manner as in operation 611.

In an embodiment of the present disclosure, the network apparatus may select a terminal to be migrated to the second DU from among the terminals of the first cell connected to the RLC entity of the first DU (911). For example, the network apparatus may select a single terminal to be migrated to the RLC entity of the second DU from among the terminals attached to the first cell and connected to the RLC entity of the first DU, in a similar manner as in operation 612 of FIG. 6.

In an embodiment of the present disclosure, the network apparatus may identify whether the first cell is configured as a PCell or an SCell for the terminal selected in operation 911 (912). In a similar manner as in operation 905, the network apparatus may obtain from the MAC scheduler information indicating whether the first cell is a PCell or an SCell of the selected terminal and identify, based on the obtained information, whether the PCell of the selected terminal is the first cell. Based on the first cell being configured as a PCell for the selected terminal, the network apparatus may perform operations 913 to 915. Based on the first cell being configured as a PCell for the selected terminal, the network apparatus may no longer switch (or change) a path for the selected terminal and perform operation 916.

In an embodiment of the present disclosure, based on the first cell being configured as a PCell for the terminal selected in operation 912, the network apparatus may perform operations 913 to 915. The network apparatus may establish the RLC UE context for the selected terminal on the second DU (913). For example, the network apparatus may migrate context information of the selected terminal that is associated with the RLC entity of the first DU to the RLC entity of the second DU.

In an embodiment of the present disclosure, based on the first cell being configured as a PCell of the terminal selected in operation 912, the network apparatus may switch the midhaul path of the second DU (914). For example, the network apparatus may switch the midhaul path between the first DU and the CU to be connected between the second DU and the CU for the selected terminal. Accordingly, the path between the CU and the RLC entity of the first DU may be switched to a path between the CU and the RLC entity of the second DU.

In an embodiment of the present disclosure, based on the first cell being configured as a PCell of the terminal selected in operation 912, the network apparatus may switch the PCell path and the SCell path between the RLC entity and the MAC entity for the selected terminal (915). For example, the network apparatus may switch the PCell data path connected between the RLC entity of the first DU and the MAC entity of the second DU, which has been switched in operation 906, to be connected between the RLC entity of the second DU and the MAC entity of the second DU. The network apparatus may switch the SCell data path of the selected terminal, which is connected between the RLC entity of the first DU and the MAC entity of the first DU to be connected between the RLC entity of the second DU and the MAC entity of the second DU.

In an embodiment of the present disclosure, the network apparatus may identify whether there is a terminal to be migrated to the second DU from among the terminals of the first cell connected to the RLC entity of the first DU (916). For example, the network apparatus may identify whether there is a terminal to be migrated, in a similar manner as in operation 617.

From among the terminals of the first cell connected to the RLC entity of the first DU, based on the existence of a terminal to be migrated to the second DU, the network apparatus may perform operations 911 to 916 again. For example, based on the terminal selected in operation 911 not being the last terminal of the determined migration order or based on the existence of a terminal that has not been selected, the network apparatus may identify that there is a terminal connected to the RLC entity of the first DU and perform operations 911 to 916 again. For example, based on the terminal selected in operation 911 being the last terminal of the determined migration order or based on the absence of a terminal that has not been selected, the network apparatus may identify that no terminal to be migrated to the second DU from among the terminals connected to the RLC entity of the first DU exists (or is left) and terminate the method 900.

According to operations 911 to 917, the paths for the PCell of the UEs whose target cell is configured as a PCell between the MAC entity of the target DU and the RLC entity of the source DU may be switched to paths between the MAC entity of the target DU and the RLC entity of the target DU. For example, the paths for PCell of the UEs whose target cells are configured as a PCell may be switched from the "source DU RLC-target DU MAC" path to the "target DU RLC-target DU MAC" path. According to operations 910 to 916, the paths for the SCell of the UEs whose target cell is configured as an SCell between the MAC entity of the target DU and the RLC entity of the source DU may be switched to paths between the MAC entity of the target DU and the RLC entity of the target DU. For example, the paths for SCell of the UEs whose target cells are configured as a PCell may be switched from the "source DU RLC-target DU MAC" path to the "target DU RLC-target DU MAC" path.

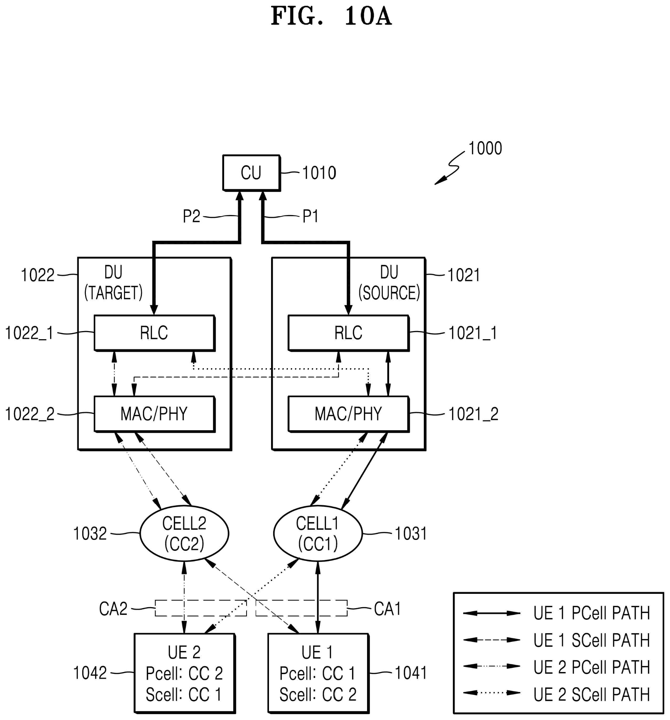

FIGS. 10A to 10C are each a diagram illustrating an example of a data flow in a user plane due to scaling-in of a first DU to a second DU by a network apparatus according to an embodiment of the present disclosure. FIGS. 10A to 10C illustrate the chronological changes in data flow resulting from the migration of a cell 1031 from a DU 1021 to a DU 1022 in a RAN system 1000 implemented based on the inter-DU CA scenario shown in FIG. 4B. In the embodiments of FIGS. 10A to 10C, the DU 1021 may be understood as a source DU or a first DU, the DU 1022 may be understood as a target DU or a second DU, and the cell 1031 may be understood as a target cell or a first cell. In the embodiment illustrated in FIG. 10A, the RAN system 1000 may support the carrier aggregation of the cell 1031 and a cell 1032 in a similar manner as in the RAN system 400a of FIG. 4A. For convenience of illustration, only two cells (1031 and 1032) are shown in FIG. 10A. However, the number of carrier-aggregated cells is not limited thereto.

A network apparatus configured to manage and maintain the RAN system 1000 (e.g., an OAM module) may determine whether to migrate the cell 1031 from the DU 1021 to the DU 1022. For example, the network apparatus may determine to perform a scale-in to the DU 1022 for the DU 1021. The determination to perform a scale-in may include determining to migrate the cell 1031 associated with the DU 1021 to the DU 1022. Based on the determination to perform a scale-in, the network apparatus may determine a scaling status of scale-in and notify the network apparatus (e.g., a scale agent) configured to manage scaling of DUs of the determined scaling status and the scale-in request.

The network apparatus configured to manage the scaling of the DUs of the RAN system 1000 may identify the scaling status notified by the OAM module as a scale-in. Based on the identification of the scaling status as a scale-in, the network apparatus may omit migration of a cell context of the cell 1031 included in the DU 1021 from the DU 1021 to the DU 1022 and perform the method 900 of FIG. 9. FIG. 10A illustrates a data flow of the RAN system 1000 before the network apparatus of the RAN system 1000 performs the method 900 of FIG. 6.

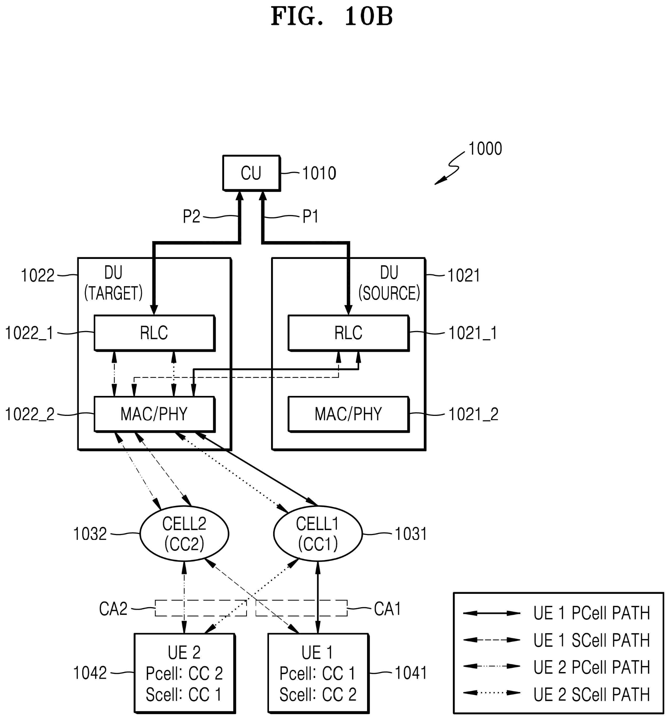

The network apparatus may migrate the MAC context of the cell 1031 associated with an MAC/PHY entity 1021_2 of the DU 1021 to an MAC/PHY entity 1022_2 of the DU 1022 in a similar manner as in operation 901. The network apparatus may suspend the MAC scheduling for the cell 1031 of the DU 1021 in a similar manner as in operation 902. The network apparatus may switch the fronthaul path for the cell 1031 in a similar manner as in operation 903. For example, the network apparatus may switch the fronthaul path connected between the RU connected to the cell 1031 and the MAC/PHY entity 1021_2 of the DU 1021 to a path between the RU connected to the cell 1031 and the MAC/PHY entity 1022_2 of the DU 1022. Accordingly, the "UE 1 PCell path" between the cell 1031 and the MAC/PHY entity 1021_2 in FIG. 10A may be switched to the "UE 1 PCell path" between the cell 1031 and the MAC/PHY entity 1022_2 in FIG. 10B. In a similar manner, the "UE 2 SCell path" between the cell 1031 and the MAC/PHY entity 1021_2 in FIG. 10A may be switched to the "UE 2 SCell path" between the cell 1031 and the MAC/PHY entity 1022_2 in FIG. 10B.

The network apparatus may select any one UE between UEs (1041 and 1042) attached to the cell 1031 in a similar manner as in operation 904. For example, the network apparatus may select the UE 1041 arbitrarily or based on a predetermined migration order. The network apparatus may identify whether the cell 1031 is configured as a PCell or an SCell for the UE 1041 in a similar manner as in operation 905. Based on the PCell of the UE 1041 being configured as the cell 1031 corresponding to the component carrier "CC1", the network apparatus may switch the path for the PCell between the MAC entity and the RLC entity of the UE 1041 in a similar manner as in operation 906. In the embodiment of FIG. 10A, the path for the PCell between the MAC entity and the RLC entity of the UE 1041 may be the "UE 1 PCell path" between the MAC/PHY entity 1021_2 and the RLC entity 1021_1. The network apparatus may switch the "UE 1 PCell path" between the MAC/PHY entity 1021_2 and the RLC entity 1021_1 to a path between the MAC/PHY entity 1022_2 and the RLC entity 1021_1. Accordingly, the "UE 1 PCell path" between the MAC/PHY entity 1021_2 and the RLC entity 1021_1 in FIG. 10A may be switched to the "UE 1 PCell path" between the MAC/PHY entity 1022_2 of the DU 1022 and the RLC entity 1021_1 in FIG. 10B.

The network apparatus may identify whether there is a UE to be migrated to the DU 1022 from among the UEs (1041 and 1042) of the cell 1031. For example, the network apparatus may identify whether there is a UE to be migrated to the DU 1022 from among the UEs (1041 and 1042) of the cell 1031 in similar manner as in operation 908. The network apparatus may identify that the UE 1042 should be migrated to the DU 1022 and may re-select the UE 1042 in a similar manner as in operation 904 to migrate the UE 1042 to the DU 1022 of the cell 1031.

The network apparatus may identify whether the cell 1031 is configured as a PCell or an SCell for the selected UE 1042 in a similar manner as in operation 905. Based on the SCell of the UE 1042 being configured as the cell 1031 corresponding to the component carrier "CC1", the network apparatus may switch the path for the SCell between the MAC entity and the RLC entity of the UE 1042 in a similar manner as in operation 907. In the embodiment of FIG. 10A, the path for the SCell between the MAC entity and the RLC entity of the UE 1042 may be the "UE 2 SCell path" between the MAC/PHY entity 1021_2 and the RLC entity 1022_1. The network apparatus may switch the "UE 2 SCell path" between the MAC/PHY entity 1021_2 and the RLC entity 1022_1 to the path between the MAC/PHY entity 1022_2 and the RLC entity 1022_2. Accordingly, the "UE 2 SCell path" between the MAC/PHY entity 1021_2 and the RLC entity 1022_1 in FIG. 10A may be switched to the "UE 2 SCell path" between the MAC/PHY entity 1022_2 of the DU 1022 and the RLC entity 1022_1 in FIG. 10B.

The network apparatus may identify whether there is a UE to be migrated to the DU 1022 from among the UEs (1041 and 1042) of the cell 1031 in similar manner as in operation 908. For example, based on the method described in relation to operation 908, the network apparatus may identify whether there is a UE to be migrated to the DU 1022 from among the UEs (1041 and 1042) of the cell 1031.

In the embodiment of FIG. 10B, all UEs (1041 and 1042) of the cell 1031 may be selected once, and whether the cell 1031 is configured as a PCell for a selected UE may be identified. Or, as the path between the MAC entity and the RLC entity of each of the UEs (1041 and 1042) of the cell 1031 is switched, all UEs (1041 and 1042) of the cell 1031 may have a path connected between the MAC/PHY entity 1022_2 of the DU 1022 and the RLC entity 1021_1 of the DU 1021. Alternatively, all UEs (1041 and 1042) of the cell 1031 may communicate with the CU via the cell 1031 through the path between the MAC/PHY entity 1022_2 of the DU 1022 and the RLC entity of any DU in the DU pool (in the embodiment of FIG. 10B, the RLC entity 1022_1 of the DU 1021). Accordingly, the network apparatus may identify that there is no UE to be migrated to the DU 1022 from among the UEs (1041 and 1042) of the cell 1031. Based on the identification that there is no UE to be migrated to the DU 1022, the network apparatus may resume the MAC scheduling for the cell 1031 in a similar manner as in operation 909. For example, the network apparatus may control (or instruct) the MAC/PHY entity 1022_2 of the DU 1022 to start the MAC scheduling for the cell 1031.

FIG. 10B illustrates a data flow of the RAN system 1000 after the network apparatus of the RAN system 1000 of FIG. 10A performs operations 901 to 909 of the method 900 of FIG. 9. In comparison between FIG. 10A and FIG. 10B, the "UE 1 PCell path" between the RLC entity 1021_1 of the DU 1021 and the MAC/PHY entity 1021_2 of the DU 1021 in FIG. 10A may be switched to the "UE 1 PCell path" between the RLC entity 1021_1 of the DU 1021 and the MAC entity 1022_2 of the DU 1022 in FIG. 10B. The "UE 2 SCell path" between the RLC entity 1021_1 of the DU 1021 and the MAC entity 1022_2 of the DU 1022 in FIG. 10A may be switched to the "UE 2 SCell path" between the MAC entity 1022_2 of the DU 1022 and the RLC entity 1022_1 of the DU 1022 in FIG. 10B.

The network apparatus may establish the RLC context of the DU 1021 on the DU 1022 in a similar manner as in operation 910. The network apparatus may select a UE to be migrated to the DU 1022 from among the UEs (1041 and 1042) of the cell 1031 connected to the RLC entity 1021_1 of the DU 1021 in a similar manner as in operation 911. For example, the network apparatus may select the UE 1041 as a UE to be migrated. The network apparatus may identify whether the cell 1031 is configured as a PCell or an SCell for the UE 1041 in a similar manner as in operation 912. Based on the PCell of the UE 1041 being configured as the cell 1031 corresponding to the component carrier "CC1," the network apparatus may establish the RLC UE context for the UE 1041 on the RLC entity 1022_2 of the DU 1022 in a similar manner as in operation 913. The network apparatus may switch the midhaul path P1 for the UE 1041 between the DU 1021 and the CU 1010 to a path between the RLC entity 1022_1 of the DU 1022 and the CU 1010 in a similar manner as in operation 914.

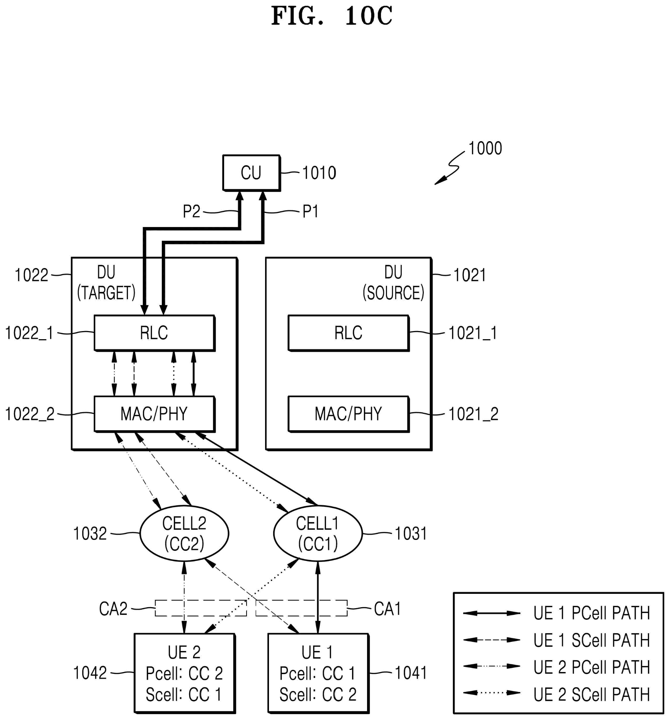

The network apparatus may switch the path for the SCell and the path for the PCell between the MAC entity and the RLC entity of the UE 1041 in a similar manner as in operation 915. For example, the network apparatus may switch the "UE 1 PCell path" between the MAC/PHY entity 1022_2 of the DU 1022 and the RLC entity 1021_1 of the DU 1021 illustrated in FIG. 10B to be between the MAC/PHY entity 1022_2 of the DU 1022 and the RLC entity 1022_1 of the DU 1022. The network apparatus may switch the "UE 1 SCell path" between the MAC/PHY entity 1022_2 of the DU 1022 and the RLC entity 1021_1 of the DU 1021 illustrated in FIG. 10B to be between the MAC/PHY entity 1022_2 of the DU 1022 and the RLC entity 1022_1 of the DU 1022. Accordingly, the "UE 1 PCell path" between the MAC/PHY entity 1022_2 and the RLC entity 1021_1 in FIG. 10B may be switched to the "UE 1 PCell path" between the MAC/PHY entity 1022_2 and the RLC entity 1022_1 of the DU 1022 in FIG. 10C. The "UE 1 SCell path" between the MAC/PHY entity 1022_2 and the RLC entity 1021_1 in FIG. 10B may be switched to the "UE 1 SCell path" between the MAC/PHY entity 1022_2 of the DU 1022 and the RLC entity 1022_1 of the DU 1022 in FIG. 10C.

The network apparatus may identify whether there is a UE to be migrated to the RLC entity 1022_1 of the DU 1022 from among the UEs (1041 and 1042) of the cell 1031 in similar manner as in operation 916. The network apparatus may identify that, from among the UEs (1041 and 1042) of the cell 1031, the UE 1042 should be migrated to the RLC entity 1022_1 of the DU 1022 and select the UE 1042 as a UE to be migrated to the DU 1022 of the cell 1031 in a similar manner as in operation 911.

The network apparatus may identify whether the cell 1031 is configured as a PCell or an SCell for the selected UE 1042 in a similar manner as in operation 912. Based on the SCell of the UE 1042 being configured as the cell 1031 corresponding to the component carrier "CC1," the network apparatus may identify whether a UE to be migrated to the RLC entity 1022_1 of the DU 1022 exists (or is left) from among the UEs (1041 and 1042) of the cell 1031 in a similar manner as in operation 916 without switching of the path for the UE 1042. Based on all UEs (1041 and 1042) of the cell 1031 having been selected once, the network apparatus may identify that there is no UE to be migrated to the RLC entity 1022_1 of the DU 1022 and may terminate the scaling.

FIG. 10C illustrates a data flow of the RAN system 1000 after the network apparatus of the RAN system 1000 of FIG. 10B performs operations 910 to 916 of the method 900 of FIG. 9. In comparison between FIG. 10B and FIG. 10C, the "UE 1 PCell path" between the RLC entity 1021_1 of the DU 1021 and the MAC entity 1022_2 of the DU 1022 in FIG. 10B may be switched to the "UE 1 PCell path" between the RLC entity 1022_1 of the DU 1022 and the MAC entity 1022_2 of the DU 1022 in FIG. 10C. The "UE 1 SCell path" between the RLC entity 1021_1 of the DU 1021 and the MAC/PHY entity 1021_2 of the DU 1021 in FIG. 10B may be switched to the "UE 1 SCell path" between the MAC entity 1022_2 of the DU 1022 and the RLC entity 1022_1 of the DU 1022 in FIG. 10C.

In comparison between FIG. 10A and FIG. 10C, the cell 1031 and the cell 1032 of FIG. 10A may be processed together by a plurality of DUs (1021 and 1022), while the cell 1031 and the cell 1032 of FIG. 10C may be processed by a single DU 1021 through scaling-in. Accordingly, in an embodiment of the present disclosure, the RAN system 1000 of FIG. 10A, which follows the inter-DU CA scenario, may be modified to follow the intra-DU CA scenario as shown in FIG. 10C, after the scale-in to add the first DU. In an embodiment of the present disclosure, a scale-in may be performed with respect to the RAN system 400a of FIG. 4A. For example, the OAM module of the RAN system 400a may determine to migrate the cell 431 from the DU 420a to another DU (target DU) to remove the DU 420a from the DU pool of the RAN system 400a or to reduce the load of the DU 420a. Such migration may be performed in a manner similar to the intra-DU scaling-out, except that initiation by the target DU is not required because the target DU already exists within the DU pool. Accordingly, scaling in the DU 420a of FIG. 4A to the target DU may be performed in a similar manner as in the method 600 of FIG. 6 and the intra-DU scaling-out described in relation to FIGS. 7A to 7C.

FIG. 11 is a diagram illustrating an example of a network apparatus according to an embodiment of the present disclosure. The network apparatus 1100 illustrated in FIG. 11 may be an electronic apparatus configured to perform a cell migration operation for a DU. For example, the network apparatus 1100 may be a server apparatus. The network apparatus 1100 may be a communication apparatus constituting a RAN. The network apparatus 1100 may be a network apparatus or server apparatus that constitutes an existing RAN, such as a network apparatus or server apparatus configured to perform an RU function, a network apparatus or server apparatus configured to perform a DU function, a network apparatus or server apparatus configured to perform a CU function, a network apparatus or server apparatus configured to perform an OAM function, etc. The network apparatus 1100 may be a separate network apparatus or server apparatus (e.g., a scale agent apparatus) configured to control cell migration.

In an embodiment of the present disclosure, the network apparatus 1100 may include at least one processor 1110 and memory 1120. However, the present disclosure is not limited thereto. The processor 1110 may be electrically connected with the components included in the network apparatus 1100 and may perform calculation or data processing related to control of the components included in the network apparatus 1100 and/or communication. In an embodiment of the present disclosure, the processor 1110 may load and process a request, a command, or data received from at least one of other components, and store the processing result data in the memory 1120. According to various embodiments, the processor 1110 may include at least one of a general-purpose processor such as a central processing unit (CPU), an application processor (AP), a digital signal processor (DSP), etc., a graphic processor such as a graphic processing unit (GPU), a vision processing unit (VPU), etc., or an AI-dedicated processor such as a neural processing unit (NPU).

The processor 1110 may control to process input data according to predefined operating rules, algorithms, methods, or models stored in the memory 1120. The processor 1110 may control to process input data based on the data stored in the memory 1120. The processor 1110 may perform predefined operational rules, algorithms, methods, or operations of models stored in the memory 1120 by using input data. in an embodiment, the processor 1110 may include at least one processing circuitry such as a system-on-chip (SoC) or an integrated circuit (IC).

The memory 1120 may be electrically connected to the processor 1110 and store at least one module, algorithm, operational rule, model, program, instruction, or data related to operations of the components included in the network apparatus 1100. For example, the memory 1120 may store at least one module, algorithm, operational rule, model, program, instruction, or data for processing and control by the processor 1110. The memory 1120 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk; however, the disclosure is not limited thereto.

In an embodiment, the memory 1120 may store data or information identified, obtained, generated, or determined by the network apparatus 1100. The memory 1120 may store data or information identified, obtained, generated, or determined by the network apparatus 1100 in a compressed form. In an embodiment, the memory 1120 may include one or more storage media storing one or more instructions executable by the processor 1110. When the one or more instructions are executed individually or collectively by the processor 1110, it may cause the network apparatus 1100 to perform at least some of the operations described above in relation to FIGS. 1 to 10.

Some modules configured to perform at least one operation of the network apparatus 1100 may be implemented as hardware modules, software modules, and/or a combination thereof. The memory 1120 may include software modules configured to perform at least some of the operations of the network apparatus 1100. In an embodiment of the present disclosure, the processor 1110 may execute a module included in the memory 1120 to perform an operation. For example, the module (i.e., software module) included in the memory 1120 may be executed according to a control or command by the processor 1110 and may include a program, model, or algorithm configured to perform operations for deriving output data with respect to input data. Some modules configured to perform at least one operation of the network apparatus 1100 may include a plurality of sub-modules or constitute a single module.

The network apparatus 1100 may include more components in addition to the components illustrated in FIG. 11. In an embodiment of the present disclosure, the network apparatus 1100 may further include a communication interface (or communication module) for communication with external apparatuses. In an embodiment of the present disclosure, the network apparatus 1100 may further include an input/output apparatus and/or an input/out interface.

In the present disclosure, redundant descriptions provided in relation to FIGS. 1 to 11 may be omitted, and one or more of the above-described embodiments may be applied or implemented in combination with each other. In the present disclosure, the operations described as being performed by a module may be executed or performed by an electronic apparatus in which the module is included or stored, or may be executed or performed under the control of at least one processor of the electronic apparatus including the module. The operations described as being performed by an electronic apparatus may be executed or performed by a module included or stored in the electronic apparatus, or may be performed under the control of at least one processor of the electronic apparatus using the module included or stored therein.

A method of scaling at least one DU, performed by a network apparatus supporting aggregation of a plurality of cells, according to an embodiment of the present disclosure includes: switching a path between an RU of a first cell and a PHY entity of a first DU to a path between the RU and a PHY entity of a second DU; identifying whether the first cell is configured as a PCell or an SCell for a terminal; based on the first cell being configured as a PCell for the terminal: switching a path between an RLC entity of the first DU and an MAC entity of the first DU to a path between the RLC entity of the first DU and an MAC entity of the second DU; migrating context information of the terminal associated with the RLC entity of the first DU to an RLC entity of the second DU; switching a path between a CU and the RLC entity of the first DU to a path between the CU and the RLC entity of the second DU; and switching a path between the RLC entity of the first DU and the MAC entity of the second DU to a path between the RLC entity of the second DU and the MAC entity of the second DU.

5G NR RAN systems may generally support CA. In an embodiment of the present disclosure, on a RAN system supporting CA, a target cell may be efficiently scaled from a source DU to a target DU. Accordingly, by supporting both CA and DU scaling, the RAN system may increase cell capacity by securing a wider communication spectrum while efficiently utilizing system resources.

In an embodiment of the present disclosure, the method of scaling at least one DU may further include: migrating an MAC context of the terminal associated with the MAC entity of the first DU to the MAC entity of the second DU; and suspending MAC scheduling for the first cell.

In an embodiment of the present disclosure, the method may further include resuming the MAC scheduling for the first cell, when all terminals attached to the first cell are capable of communicating with the CU via the first cell through at least one path between an RLC entity of any one of DUs capable of communicating with the CU and the MAC entity of the second DU.

In an embodiment of the present disclosure, the method may further include, based on the first cell being configured as an SCell for the terminal, switching a path between an RLC entity of the first DU and an MAC entity of the first DU to a path between the RLC entity of the first DU and an MAC entity of the second DU.

In an embodiment of the present disclosure, the method may further include, based on the first cell being configured as an SCell for the terminal, switching a path between an RLC entity of a third DU and an MAC entity of the first DU to a path between the RLC entity of the third DU and an MAC entity of the second DU. In an embodiment of the present disclosure, the method may further include, based on the first cell being configured as an SCell for the terminal, switching a path between an RLC entity of the second DU and an MAC entity of the first DU to a path between the RLC entity of the second DU and an MAC entity of the second DU.

In an embodiment of the present disclosure, the method may further include, based on the scaling being a scale-out, migrating a cell context of the first cell included in the first DU from the first DU to the second DU.

In an embodiment of the present disclosure, the method may further include switching a path between the RLC entity of the first DU and the MAC entity of the first DU to a path between an RLC entity of the second DU and the MAC entity of the first DU.

In an embodiment of the present disclosure, the method may further include switching a path between an RLC entity of the first DU and an MAC entity of the third DU to a path between an RLC entity of the second DU and the MAC entity of the third DU.

In an embodiment of the present disclosure, the method may further include, based on the scaling being a scale-in, switching a path between an RLC entity of the first DU and an MAC entity of the second DU to a path between the RLC entity of the second DU and the MAC entity of the second DU.

In an embodiment of the present disclosure, the method may further include terminating the scaling based on the absence of a terminal of the first cell connected to the RLC entity of the first DU.

A computer-readable non-transitory recording medium according to an embodiment of the present disclosure may be a computer-readable non-transitory recording medium having recorded thereon a program for performing, on a computer, the method of scaling at least one DU, performed by a network apparatus supporting aggregation of a plurality of cells, according to an embodiment of the present disclosure.

A network apparatus supporting aggregation of a plurality of cells according to an embodiment of the present disclosure includes: memory storing one or more instructions; and at least one processor configured to execute the one or more instructions stored in the memory. To scale at least one DU, the at least one processor may execute the one or more instructions to cause the network apparatus to: switch a path between an RU of a first cell and a PHY entity of a first DU to a path between the RU and a PHY entity of a second DU; identify whether the first cell is configured as a PCell or an SCell for a terminal; based on the first cell being configured as a PCell for the terminal: switch a path between an RLC entity of the first DU and an MAC entity of the first DU to a path between an RLC entity of the first DU and an MAC entity of the second DU; migrate context information of the terminal associated with the RLC entity of the first DU to an RLC entity of the second DU; switch a path between a CU and the RLC entity of the first DU to a path between the CU and the RLC entity of the second DU; and switch a path between the RLC entity of the first DU and the MAC entity of the second DU to a path between the RLC entity of the second DU and the MAC entity of the second DU.

According to an embodiment of the present disclosure, the at least one processor may execute the one or more instructions to further cause the network apparatus to: migrate an MAC context of the terminal associated with the MAC entity of the first DU to the MAC entity of the second DU; suspend MAC scheduling for the first cell; and resume the MAC scheduling for the first cell, when all terminals attached to the first cell are capable of communicating with the CU via the first cell through at least one path between an RLC entity of any one of DUs capable of communicating with the CU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the first DU and the MAC entity of the first DU to a path between the RLC entity of the first DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the third DU and the MAC entity of the first DU to a path between the RLC entity of the third DU and the MAC entity of the second DU.

According to an embodiment of the present disclosure, the at least one processor may execute the one or more instructions to further cause the network apparatus to: migrate an MAC context of the terminal associated with the MAC entity of the first DU to the MAC entity of the second DU; suspend MAC scheduling for the first cell; and resume the MAC scheduling for the first cell, when all terminals attached to the first cell are capable of communicating with the CU via the first cell through at least one path between an RLC entity of any one of DUs capable of communicating with the CU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the first DU and the MAC entity of the first DU to a path between the RLC entity of the first DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the third DU and the MAC entity of the first DU to a path between the RLC entity of the third DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the second DU and the MAC entity of the first DU to a path between the RLC entity of the second DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the first DU and the MAC entity of the first DU to a path between the RLC entity of the first DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the third DU and the MAC entity of the first DU to a path between the RLC entity of the third DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the second DU and the MAC entity of the first DU to a path between the RLC entity of the second DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the first DU and the MAC entity of the first DU to a path between the RLC entity of the first DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the third DU and the MAC entity of the first DU to a path between the RLC entity of the third DU and the MAC entity of the second DU.

According to an embodiment of the present disclosure, the at least one processor may execute the one or more instructions to further cause the network apparatus to, based on the first cell being configured as an SCell for the terminal, switch a path between the RLC entity of the second DU and the MAC entity of the first DU to a path between the RLC entity of the second DU and the MAC entity of the second DU.

According to an embodiment of the present disclosure, the at least one processor may execute the one or more instructions to further cause the network apparatus to: based on the scaling being a scale-out, migrate a cell context of the first cell included in the first DU from the first DU to the second DU; and switch a path between the RLC entity of the first DU and the MAC entity of the first DU to a path between the RLC entity of the second DU and the MAC entity of the first DU.

According to an embodiment of the present disclosure, the at least one processor may execute the one or more instructions to further cause the network apparatus to: based on the scaling being a scale-out, migrate a cell context of the first cell included in the first DU from the first DU to the second DU; and switch a path between the RLC entity of the first DU and the MAC entity of the third DU to a path between the RLC entity of the second DU and the MAC entity of the third DU.

According to an embodiment of the present disclosure, the at least one processor may execute the one or more instructions to further cause the network apparatus to, based on the scaling being a scale-in, switch a path between the RLC entity of the first DU and the MAC entity of the second DU to a path between the RLC entity of the second DU and the MAC entity of the second DU.

According to an embodiment of the present disclosure, the at least one processor may execute the one or more instructions to further cause the network apparatus to, based on the absence of the terminal of the first cell connected to the RLC entity of the first DU, terminate the scaling.

A non-transitory storage medium may be provided as a machine-readable storage medium. The non-transitory storage medium simply means that the medium is tangible and does not include signals (e.g., electromagnetic waves), and this term is not intended to distinguish semi-permanent storage of data in a storage medium from temporary storage of the same. For example, the non-transitory storage medium may include a buffer in which data is temporarily stored.

According to an embodiment, the method described in various embodiments of the present disclosure may be included and provided in a computer program product. A computer program product may be traded between a seller and a buyer. The computer program product may be distributed in the form of a machine-readable storage medium (e.g., compact disc read-only memory; CD-ROM), or distributed (e.g., downloaded or uploaded) online through an application store or directly between two user apparatuses (e.g., smartphones). In the case of online distribution, at least some of the computer program products (e.g., a downloadable application, etc.) may be at least temporarily stored in a storage medium readable by apparatuses, such as a memory of a manufacturer server, an application store server, or a relay server or temporarily generated.

While embodiments of the present disclosure have been particularly shown and described with reference to the accompanying drawings, various modifications and changes may be made from the descriptions by one of skill in the art. For example, proper results may be achieved even when the operations described above may be performed differently from the described order, and/or the aforementioned components, such as computer systems, modules, etc. are coupled or combined in other forms, replaced or substituted with other components or equivalents.

## Claims

1. A method of scaling at least one distributed unit (DU), performed by a network apparatus supporting carrier aggregation, the method comprising:
switching a path between a radio unit (RU) of a first cell and a physical (PHY) entity of a first DU to a path between the RU and a PHY entity of a second DU (501);
identifying whether the first cell is configured as a primary cell (PCell) or a secondary cell (SCell) for a terminal (502);
based on the first cell being configured as a PCell for the terminal:
switching a path between a radio link control (RLC) entity of the first DU and a medium access control (MAC) entity of the first DU to a path between the RLC entity of the first DU and an MAC entity of the second DU (503);
migrating context information of the terminal associated with the RLC entity of the first DU to an RLC entity of the second DU (504);
switching a path between a central unit (CU) and the RLC entity of the first DU to a path between the CU and the RLC entity of the second DU (505); and
switching a path between the RLC entity of the first DU and the MAC entity of the second DU to a path between the RLC entity of the second DU and the MAC entity of the second DU (506).

2. The method of claim 1, further comprising:
migrating an MAC context of the terminal associated with the MAC entity of the first DU to the MAC entity of the second DU (602, 910); and
suspending MAC scheduling for the first cell (603, 902).

3. The method of claim 1 or 2, further comprising, when all terminals attached to the first cell are capable of communicating with the CU via the first cell through at least one path between an RLC entity of any one of DUs capable of communicating with the CU and the MAC entity of the second DU, resuming the MAC scheduling for the first cell (609, 908).

4. The method of any one of claims 1 to 3, further comprising, based on the first cell (731) being configured as the SCell for the terminal (742), switching the path between the RLC entity (721_1) of the first DU and the MAC entity (721_2) of the first DU to the path between the RLC entity (721_1) of the first DU and the MAC entity (722_2) of the second DU.

5. The method of any one of claims 1 to 4, further comprising, based on the first cell (831) being configured as the SCell for the terminal (842), switching a path between an RLC entity (823_1) of a third DU and an MAC/PHY entity (821_2) of the first DU to a path between the RLC entity (823_1) of the third DU and the MAC entity (822_2) of the second DU.

6. The method of any one of claims 1 to 5, further comprising, based on the first cell (1031) being configured as the SCell for the terminal (1042), switching a path between the RLC entity (1022_1) of the second DU and an MAC/PHY entity (1021_2) of the first DU to the path between the RLC entity (1022_1) of the second DU and the MAC entity (1022_2) of the second DU.

7. The method of any one of claims 1 to 6, further comprising, based on the scaling being a scale-out, migrating a cell context of the first cell included in the first DU from the first DU to the second DU (601).

8. The method of any one of claims 1 to 7, further comprising switching the path between the RLC entity (721_1) of the first DU and the MAC entity (721_2) of the first DU to a path between the RLC entity (722_1) of the second DU and the MAC entity (721_2) of the first DU.

9. The method of any one of claims 1 to 8, further comprising switching a path between an RLC entity (821_1) of the first DU and an MAC/PHY entity (823_2) of the third DU to a path between an RLC entity (822_1) of the second DU and the MAC/PHY entity (823_2) of the third DU.

10. The method of any one of claims 1 to 9, further comprising, based on the scaling being a scale-in, switching a path between the RLC entity (1021_1) of the first DU and an MAC/PHY entity (1022_2) of the second DU to the path between the RLC entity (1022_1) of the second DU and the MAC entity (1022_2) of the second DU.

11. A non-transitory computer-readable recording medium having recorded thereon a program for performing the method of any one of claims 1 to 10, on a computer.

12. A network apparatus (1100) supporting carrier aggregation, the network apparatus comprising:
memory (1120) storing one or more instructions; and
at least one processor (1110) configured to execute the one or more instructions stored in the memory,
wherein, to scale at least one distributed unit (DU), the one or more instructions, when executed by the at least one processor cause the network apparatus to:
switch a path between a radio unit (RU) of a first cell and a physical (PHY) entity of a first DU to a path between the RU and a PHY entity of a second DU;
identify whether the first cell is configured as a primary cell (PCell) or a secondary cell (SCell) for a terminal;
based on the first cell being configured as a PCell for the terminal:
switch a path between a radio link control (RLC) entity of the first DU and a medium access control (MAC) entity of the first DU to a path between the RLC entity of the first DU and an MAC entity of the second DU;
migrate context information of the terminal associated with the RLC entity of the first DU to an RLC entity of the second DU;
switch a path between a central unit (CU) and the RLC entity of the first DU to a path between the CU and the RLC entity of the second DU; and
switch a path between the RLC entity of the first DU and the MAC entity of the second DU to a path between the RLC entity of the second DU and the MAC entity of the second DU.

13. The network apparatus of claim 12, wherein the one or more instructions, when executed by the at least one processor, further cause the network apparatus to:
migrate an MAC context of the terminal associated with the MAC entity of the first DU to the MAC entity of the second DU;
suspend MAC scheduling for the first cell; and
when all terminals attached to the first cell are capable of communicating with the CU via the first cell through at least one path between an RLC entity of any one of DUs capable of communicating with the CU and the MAC entity of the second DU, resume the MAC scheduling for the first cell.

14. The network apparatus of claim 12 or 13, wherein the one or more instructions, when executed by the at least one processor, further cause the network apparatus to:
based on the scaling being a scale-out, migrate a cell context of the first cell included in the first DU from the first DU to the second DU; and
switch the path between the RLC entity of the first DU and the MAC entity of the first DU to a path between the RLC entity of the second DU and the MAC entity of the first DU.

15. The network apparatus of any one of claims 12 to 14, wherein the at least one processor executes the one or more instructions to further cause the network apparatus to, based on the scaling being a scale-in, switch a path between the RLC entity of the second DU and the MAC entity of the first DU to the path between the RLC entity of the second DU and the MAC entity of the second DU.
